(19) Europäisches Patentamt / European Patent Office / Office européen des brevets

(11) **EP 3 610 595 B1**

(12) **EUROPÄISCHE PATENTSCHRIFT**

(45) Veröffentlichungstag und Bekanntmachung des Hinweises auf die Patenterteilung:
**07.07.2021   Patentblatt 2021/27**

(51) Int Cl.:
**H04L 1/08** *(2006.01)*   **H04L 25/02** *(2006.01)*
**H04L 27/26** *(2006.01)*

(21) Anmeldenummer: **18722396.1**

(22) Anmeldetag: **06.04.2018**

(86) Internationale Anmeldenummer:
**PCT/EP2018/025097**

(87) Internationale Veröffentlichungsnummer:
**WO 2018/188808 (18.10.2018 Gazette 2018/42)**

(54) **SENDER UND EMPFÄNGER UND ENTSPRECHENDE VERFAHREN**

TRANSMITTER AND RECEIVER AND CORRESPONDING METHODS THEREOF

EMETTEUR ET RECEPTEUR ET PROCEDES CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2017   DE 102017206248**

(43) Veröffentlichungstag der Anmeldung:
**19.02.2020   Patentblatt 2020/08**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **KNEISSL, Jakob**
**90765 Fürth (DE)**
• **KILIAN, Gerd**
**91056 Erlangen (DE)**
• **BERNHARD, Josef**
**92507 Nabburg (DE)**
• **ROBERT, Jörg**
**91058 Erlangen - Tennenlohe (DE)**
• **WECHSLER, Johannes**
**91174 Spalt (DE)**
• **SOLLER, Dominik**
**90571 Schwaig (DE)**
• **KOCH, Wolfgang**
**91220 Schnaittach (DE)**

(74) Vertreter: **Schlenker, Julian et al**
**Schoppe, Zimmermann, Stöckeler Zinkler, Schenk & Partner mbB Patentanwälte Radlkoferstraße 2 81373 München (DE)**

(56) Entgegenhaltungen:
• **WANG S S ET AL: "ANALYSIS OF DOWN-LINK LOCATION METHODS FOR WCDMA AND CDMA2000", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, Bd. CONF. 53, 6. Mai 2001 (2001-05-06), Seiten 2580-2584, XP001076225, DOI: 10.1109/VETECS.2001.944067 ISBN: 978-0-7803-6728-9**
• **GARG D ET AL: "Chip interleaved turbo codes for DS-CDMA in a Rayleigh fading channel with diversity reception", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, Bd. 3, 24. September 2002 (2002-09-24), Seiten 1777-1781, XP010608735, DOI: 10.1109/VETECF.2002.1040522 ISBN: 978-0-7803-7467-6**

EP 3 610 595 B1

**Beschreibung**

Die Erfindung bezieht sich auf einen Sender sowie auf einen Empfänger und entsprechende Verfahren zum Senden bzw. Empfangen von Signalen.

Bei vielen Datenübertragungssystemen werden für die Signaldetektion bzw. die Parameterschätzung Pilotsequenzen (auch Trainingssequenzen oder Synchronisationssequenzen genannt) in die zu übertragenden Datenströme eingefügt. Dabei kann es sich sowohl um die Übertragung eines ununterbrochenen Datenstroms handeln, in den in gewissen Abständen Pilotsequenzen eingestreut werden, als auch um eine paketorientierte Übertragung, bei der üblicherweise jedes Paket (auch Telegramm genannt) genau eine Pilotsequenz enthält. Die Pilotsequenz wird auch Präambel bzw. Midambel genannt, wenn sie sich am Anfang bzw. in der Mitte des Pakets befindet. Eine Pilotsequenz kann aber auch innerhalb des Pakets in Form zweier oder mehrerer Teilsequenzen verteilt sein.

Bei Telemetriesystemen, Sensornetzen sowie Anwendungen unter dem Stichwort Internet of Things (IoT) findet zumeist eine asynchrone Paketübertragung mit langen Sendepausen zwischen den Paketen statt.

Bei asynchroner Paketübertragung sind Sender und Empfänger nicht synchronisiert, d. h. der Empfänger kennt die Sendezeitschlitze der einzelnen Datenpakete nicht. Um kein Paket zu verpassen, muss er während der gesamten Empfangsbereitschaft zeitlich kontinuierlich sein Empfangssignal auf das Vorhandensein eines Pakets überprüfen und dessen zeitliche Lage mit einer gewissen Genauigkeit schätzen.

Erschwerend kommt hinzu, dass die tatsächliche Trägerfrequenz des Sendesignals erheblich von der Nominalfrequenz abweichen und sich mit der Zeit verändern kann. Auch die Mittenfrequenz des Empfangsfilters kann von der Nominalfrequenz abweichen. Aus Sicht des Empfängers ist die Frequenzdifferenz zwischen der Trägerfrequenz des Sendesignals und der Mittenfrequenz des Empfangsfilters - im Folgenden als Frequenzablage bezeichnet - maßgebend. Für die Datendetektion ist danach außerdem eine Schätzung der momentanen Frequenzablage und bei kohärenten Detektionsverfahren auch eine Phasenschätzung erforderlich.

Insgesamt sind vom Empfänger nacheinander zwei Themen zu bearbeiten:

1. Detektion: Erkennung eines Pakets und zumindest grobe Schätzung von dessen zeitlicher Lage, ggf. wird auch die spektrale Lage betrachtet.
2. Synchronisation bestehend aus

- Zeitsynchronisation: Schätzung der genauen zeitlichen Lage des Pakets,
- Frequenzsynchronisation: Schätzung und Korrektur der Frequenzablage und
- Phasensynchronisation: Schätzung der Phase nach erfolgter Frequenzkorrektur.

Durch die Verwendung eines asynchronen Systems ist es notwendig, eine Detektion der Telegramme mit Hilfe einer Pilotsequenz durchzuführen. Der Empfänger muss fortlaufend in seinem Empfangssignal suchen, ob ein Telegramm von einem Sensorknoten übertragen wurde. Die Entscheidung des Empfängers, ob das Empfangssignal durch Rauschen oder durch ein Sendesignal verursacht wurde, wird als Telegrammdetektion oder kurz nur als Detektion bezeichnet. Zu diesem Zweck wird bei der Übertragung den zu übermittelnden Daten typischerweise eine Pilotsequenz (in der englischen Literatur oft als "Marker" bezeichnet) mit fest definierten Pilotsymbolen (sog. "pilot symbols") vorangestellt.

In der Veröffentlichung [WANG S S ET AL: " ANALYSIS OF DOWN-LINK LOCATION METHODS FOR WCDMA AND CDMA2000", CONNECTING THE MOBILE WORLD: PROCEEDINGS / IEEE VTS 53RD VEHICULAR TECHNOLOGY CONFERENCE, SPRING, 2001] werden Spreizcodes für CDMA beschrieben.

In der Veröffentlichung [GARD D ET AL: "Chip interleaved turbo codes for DS-CDMA in a Rayleigh fading channel with diversity reception", VTC 2002-FALL. 2002 IEEE 56TH. VEHICULAR TECHNOLOGY CONFERENCE PROCEEDINGS. CANCOUVER, CANADA, SEPT. 24-28, 2002] werden Spreizcodes für CDMA beschrieben.

In der Veröffentlichung [ZH h YU ET AL: "OFDM Timing and Frequency Offset Estimation Based on Repeated Training Sequence", WIRELESS COMMUNICATIONS; NETWORKING AND MOBILE COMPUTING; 2007. WICOM 2007. INTERNATIONAL CONFERENCE ON, IEEE, PISCATAWAY, NJ, USA, 21. September 2007] wird die Durchführung einer Frequenzoffsetkompensation basierend auf wiederholten Trainingssequenzen vorgeschlagen.

In der Veröffentlichung [BYUNGJOON PARK ET AL: "A novel timing estimation method for OFDM systems", IEEE COMMUNICATIONS LETTERS, IEEE SERVICE CENTER; PISCATAWAY, NJ, US, 1. Mai 2003] beschreibt eine Präambel, die empfängerseitig bei der Korrelation eine schärfere Korrelationsspitze liefert.

Der Erfindung liegt die Aufgabe zugrunde, einen Sender und einen Empfänger vorzuschlagen, die für eine Datenkommunikation Pilotsequenzen verwenden und die die Detektion bzw. die Verarbeitung von Pilotsequenzen vereinfachen.

Die Erfindung löst die Aufgabe durch einen Sender gemäss Anprüchen 1 und 15.

Der Sender sendet somit Signale, die jeweils eine Pilotsequenz aufweisen. Die Pilotsequenzen verfügen über mehrere Pilotsequenz-Symbole. Dabei stellt ein Signalgenerator die jeweilige Pilotsequenz ausgehend von einer Basissequenz bereit, die mindestens ein Basissequenz-Symbol und in einer Ausgestaltung mehrere Basissequenz-Symbole aufweist. Das Bereitstellen umfasst dabei beispielsweise den Rückgriff auf abgelegte Pilotsequenzen oder das Erzeugen der Pilotsequenz ausgehend von der Basissequenz. Das Bereitstellen umfasst beispielsweise auch das Generieren der auszusendenden Symbole des Signals in Abhängigkeit von einem Mapping, z. B. MSK.

Das Basissequenz-Symbol wird in der Pilotsequenz (R-1)-fach hintereinander wiederholt, sodass das Basissequenz-Symbol R-fach vorhanden ist. Entsprechend werden die Basissequenz-Symbole in der Pilotsequenz jeweils (R-1)-fach hintereinander wiederholt, sodass jedes Basissequenz-Symbol R-fach vorhanden ist. Damit geht einher, dass es ausreicht, wenn auf der Empfängerseite für die Detektion nur jedes R-te Symbol erfasst und ausgewertet wird. Damit ergibt sich insgesamt die gewünschte Länge der Pilotsequenz als Anzahl der Pilotsequenz-Symbole und gleichzeitig reduziert sich der Aufwand für eine - zumindest eine erste - Auswertung des empfangenen Signals. Damit liegen also optimierte Pilotsequenzen für eine rechenoptimierte Detektion mit Hilfe einer Unterabtastung auf der Empfängerseite vor.

Die Abfolge der jeweils R-fach vorhandenen Basissequenz-Symbole (in einigen Ausgestaltungen ggf. noch weitere Symbole) werden in einer Ausgestaltung mit einem Modulationsalphabet gemappt. Dabei wird in einer Ausgestaltung ein digitales Modulationsverfahren angewendet. In einer Variante ist dies beispielsweise die binäre Phasenumtastung (binäres PSK, BPSK). So wird beispielsweise die binäre 1 auf +1 und die binäre 0 auf -1 abgebildet (gemappt). Ist daher beispielweise eine Basissequenz mit den Symbolen 0110 gegeben, so ergibt sich bei einer einfachen Wiederholung die Folge der Symbole 00111100. Daraus folgen nach einer BPSK die Symbole: [-1, -1, +1, +1, +1, +1, -1, -1].

In einer Ausgestaltung erzeugt der Signalgenerator in der Pilotsequenz mindestens einen Symbolblock, der das mindestens eine Basissequenz-Symbol und dessen (R-1) Wiederholungen umfasst.

In einer Ausgestaltung stellt der Signalgenerator die Pilotsequenz ausgehend von einer mehrere Basissequenz-Symbole aufweisenden Basissequenz bereit und stellt in der Pilotsequenz Symbolblöcke bereit, die jeweils ein Basissequenz-Symbol und dessen Wiederholungen umfassen. Weiterhin stellt der Signalgenerator die Pilotsequenz derart bereit, dass die Symbolblöcke der Basissequenz-Symbole in einer Reihenfolge der Basissequenz-Symbole innerhalb der Basissequenz einander unmittelbar folgen. In dieser Ausgestaltung werden die R-fachen Basissequenz-Symbole in der Pilotsequenz als Symbolblöcke bezeichnet, die in der Reihenfolge in der Pilotsequenz auftreten, die die Basissequenz-Symbole in der Basissequenz haben. Weiterhin folgen die Symbolblöcke unmittelbar aufeinander.

In einer Ausgestaltung ist vorgesehen, dass die Pilotsequenz L Pilotsequenz-Symbole aufweist, wobei L eine natürliche Zahl ist. Dabei ist dann eine Anzahl der Basissequenz-Symbole gleich einem Quotienten aus L geteilt durch R. Hat die Pilotsequenz somit eine Länge von acht Symbolen und wird jedes Basissequenz-Symbol einmal wiederholt, d. h. ist R = 2, so sind vier Basissequenz-Symbole erforderlich.

In einer Ausgestaltung wird jedes Basissequenz-Symbol einmal wiederholt, sodass R = 2 ist.

Eine Ausgestaltung besteht darin, dass die Basissequenz derart ausgestaltet ist, dass eine Korrelation der Pilotsequenz mit einem aus der Pilotsequenz gebildeten Sendesignal ein möglichst schmales Hauptmaximum und/oder möglichst kleine Nebenmaxima aufweist. Dies bezieht sich auf die Wahl der Basissequenz. Genauer formuliert beschreibt die Ausgestaltung die Korrelation der eigentlichen Pilotsequenz mit dem aus ihr gebildeten modulierten (zeitkontinuierlichen) Signal, das von dem Sender ausgesendet wird.

In einer Ausgestaltung ist vorgesehen, dass in dem Fall, dass die Pilotsequenz acht Pilotsequenz-Symbole aufweist, die Basissequenz eine der folgenden Formen aufweist: 0010 oder 1101 oder 0100 oder 1011. Dabei sind die Nullen und Einsen jeweils die binären Basissequenz-Bits. Die hier und im Folgenden angegebenen Sequenzen sind in einer Ausgestaltung insbesondere auf das Minimum Shift Keying (MSK) als Art der Abbildung (bzw. des Mapping) der binären Symbole auf die davon ausgehend real zu erzeugenden Signalabschnitte bezogen. Alternativ oder ergänzend gelten die hier und im Folgenden angegebenen Sequenzen für andere lineare oder quasi-lineare Modulationsverfahren wie MSK oder GMSK.

Die beschriebenen Bits werden durch eine jeweilige Modulation bzw. ein Mapping zu den eigentlichen Symbolen umgewandelt.

Eine Ausgestaltung besteht darin, dass in dem Fall, dass die Pilotsequenz zwölf Pilotsequenz-Symbole aufweist, die Basissequenz eine der folgenden oder daraus durch eine Umkehr der Bitreihenfolge gewonnenen Formen aufweist: 000101, 001011, 001101, 010001, 111010, 110100, 110010 oder 101110. Dabei sind die Nullen und Einsen jeweils die binären Basissequenz-Bits. Bei der Wahl der Basissequenz ist allgemein bekannt, dass eine Bit-Invertierung und eine Umkehrung der Bitreihenfolge Korrelationseigenschaften einer Folge nicht verändern.

In einer Ausgestaltung ist vorgesehen, dass der Signalgenerator in der Pilotsequenz mindestens einen Symbolblock bereitstellt, der ein Basissequenz-Symbol und dessen (R-1) Wiederholungen umfasst, wobei die Basissequenz-Symbole mit Phasenfaktoren versehen sind. Diese Ausgestaltung bezieht sich sowohl auf den Fall, dass die Basissequenz nur ein Basissequenz-Symbol aufweist, als auch auf die Ausgestaltung, dass die Basissequenz mehrere Basissequenz-Symbole aufweist. In der vorgenannten Ausgestaltung erscheint somit ein Basissequenz-Symbol R-fach hintereinander in der Pilotsequenz, jedoch versehen mit Phasenfaktoren.

In einer Ausgestaltung ist vorgesehen, dass der Signalgenerator die Pilotsequenz ausgehend von einer mehrere Basissequenz-Symbole aufweisenden Basissequenz bereitstellt. Dabei stellt der Signalgenerator in der Pilotsequenz Symbolblöcke bereit, die jeweils ein Basissequenz-Symbol und dessen (R-1) Wiederholungen umfassen und daher jeweils R Symbole lang sind. Dabei versieht der Signalgenerator die Basissequenz-Symbole derartig mit Phasenfaktoren, dass die Phasenfaktoren des jeweils i-ten Auftretens eines Basissequenz-Symbols in einem Symbolblock für alle Symbolblöcke gleich sind. Dabei ist i eine natürliche Zahl zwischen 1 und R und bezeichnet die Position eines Basissequenz-Symbols in dem zugehörigen Symbolblock. Dabei ist das i-te Auftreten mit i = 1 die Nullte Wiederholung. Weitere Erläuterungen ergeben sich aus der folgenden Beschreibung. In einer Ausgestaltung ist insbesondere vorgesehen, dass die wiederholten Symbole mit unterschiedlichen Phasenfaktoren versehen werden.

In einer Ausgestaltung sind die Phasenfaktoren Bestandteile eines Modulationsalphabets. Ein Modulationsalphabet dient dabei allgemein der Umwandlung von digitalen Symbolen für die analoge Verarbeitung bzw. hier der Signalübertragung.

Somit hat das jeweils erste Basissequenz-Symbol in allen Symbolblöcken den gleichen Phasenfaktor und das jeweils zweite - also an der zweiten Stelle stehende - Basissequenz-Symbol hat in allen Symbolblöcken jeweils den gleichen Phasenfaktor, der sich in einer Ausgestaltung von dem Phasenfaktor des jeweils ersten Basissequenz-Symbols unterscheidet. Über alle Basissequenz-Symbole betrachtet ist somit die Schrittweite der jeweils gleichen Phasenfaktoren durch die Wiederholung der Basissequenz-Symbole gegeben.

Eine Ausgestaltung besteht darin, dass die Phasenfaktoren sich aus einem Produkt einer mit $\varphi_r$ bezeichneten Phase und der imaginären Zahl j als Exponent der natürlichen Exponentialfunktion ergeben, wobei die Phase $\varphi_r$ zwischen 0 und $2\pi$ bzw. 0° und 360° liegt.

Eine Ausgestaltung besteht darin, dass in dem Fall, dass die Pilotsequenz acht Pilotsequenz-Symbole aufweist, die Pilotsequenz eine der folgenden oder daraus durch eine Umkehr der Bitreihenfolge gewonnenen Formen aufweist: 01011001, 10100110, 10011010, 01100101, 00001100, 11110011, 00110000, 11001111,. Dabei sind die Nullen und Einsen jeweils die binären Pilotsequenz-Bits. Bei den Pilotsequenzen werden die Symbole entsprechend der angegebenen Reihenfolge ausgesendet.

In einer Ausgestaltung ist vorgesehen, dass in dem Fall, dass die Pilotsequenz zwölf Pilotsequenz-Symbole aufweist, die Pilotsequenz eine der folgenden oder daraus durch eine Umkehr der Bitreihenfolge gewonnenen Formen aufweist:

000000110011 oder 111111001100 oder 110011000000 oder 001100111111 oder 010101100110 oder 101010011001 oder 011001101010 oder 100110010101 oder 000011001111 oder 111100110000 oder 010110011010 oder 101001100101 oder 000011110011 oder 111100001100 oder 110011110000 oder 001100001111 oder 010110100110 oder 101001011001 oder 011001011010 oder 100110100101 oder 001100000011 oder 110011111100 oder 110000001100 oder 001111110011 oder 011001010110 oder 100110101001 oder 011010100110 oder 100101011001.

Dabei sind die Nullen und Einsen jeweils die binären Pilotsequenz-Bits. In einer Ausgestaltung sind die vorgenannten Pilotsequenzen auf das MSK-Mapping bezogen.

Eine Ausgestaltung sieht vor, dass der Signalgenerator die Pilotsequenz derartig bereitstellt, dass die Pilotsequenz mindestens ein Ergänzungssymbol aufweist. Dabei stellt der Signalgenerator in der Pilotsequenz mindestens einen Symbolblock bereit, der ein Basissequenz-Symbol und dessen (R-1) Wiederholungen umfasst. Dabei stellt der Signalgenerator die Pilotsequenz derartig bereit, dass das mindestens eine Ergänzungssymbol dem Symbolblock vorangeht oder nachfolgt.

In einer Ausgestaltung ist vorgesehen, dass der Signalgenerator die Pilotsequenz derartig bereitstellt, dass die Pilotsequenz mindestens ein Ergänzungssymbol aufweist. Dabei stellt der Signalgenerator in der Pilotsequenz Symbolblöcke bereit, die jeweils ein Basissequenz-Symbol und dessen Wiederholungen umfassen. Weiterhin stellt der Signalgenerator die Pilotsequenz derartig bereit, dass das mindestens eine Ergänzungssymbol den Symbolblöcken vorangeht oder nachfolgt. In einer Ausgestaltung folgen die Symbolblöcke unmittelbar aufeinander, sodass sich zwischen den Symbolblöcken keine Ergänzungssymbole befinden bzw. die Ergänzungssymbole nur nachfolgen oder vorangehen.

In einer Ausgestaltung ist vorgesehen, dass der Signalgenerator die Pilotsequenz derartig bereit stellt, dass die Pilotsequenz mindestens zwei Ergänzungssymbole aufweist. Dabei stellt der Signalgenerator die Pilotsequenz derartig bereit, dass mindestens ein Ergänzungssymbol der mindestens zwei Ergänzungssymbole den Symbolblöcken vorangeht und mindestens ein anderes Ergänzungssymbol der mindestens zwei Ergänzungssymbole den Symbolblöcken nachfolgt. Die Pilotsequenzen bestehen somit aus einem Kern, der von den R-fach vorhandenen Basissequenz-Symbol gebildet wird, und einer Art von Umklammerung durch die Ergänzungssymbole.

Eine Ausgestaltung besteht darin, dass das mindestens eine Ergänzungssymbol oder die mindestens zwei Ergänzungssymbole derartig ausgestaltet ist bzw. sind, dass eine Korrelation der Pilotsequenz mit einem aus der Pilotsequenz gebildeten Sendesignal ein möglichst schmales Hauptmaximum und/oder möglichst kleine Nebenmaxima aufweist. Die Wahl des Ergänzungssymbols bzw. der Ergänzungssymbole fußt somit darauf, dass die sich ergebende Pilotsequenz möglichst gut zu erkennen und/oder zu synchronisieren ist.

In einer Ausgestaltung ist vorgesehen, dass in dem Fall, dass die Pilotsequenz acht Pilotsequenz-Symbole aufweist, die Basissequenz die Form 001 aufweist und zwei Ergänzungsbits vorhanden sind, die zusammen eine der folgenden Formen aufweisen: 01 oder 10 oder 00 oder 11. Dabei sind die Nullen und Einsen jeweils binären Basissequenz-Bits und die binären Ergänzungsbits. Die Ergänzungsbits werden dabei wie die anderen schon erwähnten Bits durch ein entsprechendes Mapping in die Ergänzungssymbole umgewandelt. Gleiches gilt für die Basissequenz-Bits.

Eine die obigen Ausgestaltungen ergänzende oder alternative Ausgestaltung besteht darin, dass die Pilotsequenz eine der folgenden oder daraus durch eine Umkehr der Bitreihenfolge gewonnenen Formen aufweist:
00001101 oder 11110010 oder 10110000 oder 01001111 oder 01011000 oder 10100111 oder 00011010 oder 11100101 oder 01000011 oder 10111100 oder 11000010 oder 00111101 oder 00010110 oder 11101001 oder 01101000 oder 10010111 oder 10000110 oder 01111001 oder 01100001 oder 10011110 oder 00101100 oder 11010011 oder 00110100 oder 11001011.

Dabei sind die Nullen und Einsen jeweils die binären Pilotsequenz-Bits. In einer Ausgestaltung sind die vorgenannten Pilotsequenzen auf das MSK-Mapping bezogen.

In einer Ausgestaltung ist vorgesehen, dass in dem Fall, dass die Pilotsequenz zwölf Pilotsequenz-Symbole aufweist, die Basissequenz die Form 00010 aufweist und zwei Ergänzungsbits vorhanden sind, die zusammen eine der folgenden Formen aufweisen:

01 oder 10 oder 00 oder 11. Dabei sind die Nullen und Einsen jeweils binären Basissequenz-Bits und die binären Ergänzungsbits.

Eine die obigen Ausgestaltungen ergänzende oder alternative Ausgestaltung besteht darin, dass die Pilotsequenz eine der folgenden oder daraus durch eine Umkehr der Bitreihenfolge gewonnenen Formen aufweist:
100000011001 oder 011111100110 oder 100110000001 oder 011001111110 oder 001010110011 oder 110101001100 oder 110011010100 oder 001100101011 oder 000000110010 oder 111111001101 oder 010011000000 oder 101100111111 oder 010101100111 oder 101010011000 oder 111001101010 oder 000110010101 oder 010000001100 oder 101111110011 oder 001100000010 oder 110011111101 oder 000101011001 oder 111010100110 oder 100110101000 oder 011001010111.

Dabei sind die Nullen und Einsen jeweils die binären Pilotsequenz-Bits. In einer Ausgestaltung sind die vorgenannten Pilotsequenzen auf das MSK-Mapping bezogen.

Weiterhin löst die Erfindung die Aufgabe durch Verfahren gemäss Ansprüchen 14, 16 zum Aussenden von Signalen.

Die obigen Ausgestaltungen des Senders lassen sich durch Schritte von entsprechenden Ausgestaltungen des Verfahrens realisieren, sodass hier auf eine Wiederholung der Ausführungen verzichtet sei.

Die Erfindung löst die Aufgabe ebenfalls durch einen Empfänger, welcher nicht zum Schutzumfang der Ansprüche gehört.

Der Empfänger ist derartig ausgestaltet, mindestens ein Signal zu empfangen und hinsichtlich einer Pilotsequenz auszuwerten. Für die Auswertung greift der Empfänger in einer Ausgestaltung auf hinterlegte oder allgemein bekannte Referenzsequenzen zurück.

In einer Ausgestaltung entspricht die - dem Empfänger - bekannte Referenzsequenz der vom Sender für das Aussenden verwendeten Pilotsequenz, und diese Referenzsequenz wird vom Empfänger für die Auswertung derjenigen Pilotsequenz verwendet, die das empfangene Signal aufweist.

Die folgenden Ausgestaltungen beziehen sich jeweils auf besondere Varianten der Auswertung oder der Signalaufbereitung für die Auswertung. Beschrieben sind somit insbesondere Hilfsmittel oder Hilfskomponenten des Empfängers, die der Auswertung in Hinblick auf die Pilotsequenz dienen.

In einer Ausgestaltung weist der Empfänger eine Signalauswertevorrichtung auf.

Die Signalauswertevorrichtung ist derartig ausgestaltet, das empfangene Signal einer ersten Auswertung zu unterziehen. Dabei tastet die Signalauswertevorrichtung das empfangene Signal bei der ersten Auswertung mit einer ersten Abtastrate zumindest teilweise ab. Alternativ oder ergänzend verwendet die Signalauswertevorrichtung für eine Verarbeitung von Abtastwerten des empfangenen Signals nur jeden i-ten Abtastwert. Dabei ist i eine natürliche Zahl größer oder gleich zwei. Zudem erzeugt die Signalauswertevorrichtung bei der ersten Auswertung ein Auswerteergebnis bezüglich der Pilotsequenz.

Die Signalauswertevorrichtung unterzieht in Abhängigkeit vom Auswerteergebnis das empfangene Signal einer zweiten Auswertung. Dabei tastet die Signalauswertevorrichtung das empfangene Signal bei der zweiten Auswertung mit einer zweiten Abtastrate zumindest teilweise ab. Alternativ oder ergänzend verwendet die Signalauswertevorrichtung bei der zweiten Auswertung für eine Weiterverarbeitung von Abtastwerten des empfangenen Signals nur jeden k-ten Abtastwert. Dabei ist die zweite Abtastrate größer als die erste Abtastrate bzw. ist k eine natürliche Zahl kleiner als i.

Die Signalauswertevorrichtung nimmt somit in einer ersten Auswertung eine Unterabtastung vor, indem entweder die Abtastrate bei der Abtastung entsprechend eingestellt wird oder indem weniger Abtastwerte verarbeitet werden. Werden insbesondere Signale des oben beschriebenen Senders mit den auf den Basissequenzen basierenden Pilotsequenzen verwendet, so ist aufgrund der Wiederholung der Symbole eine Unterabtastung bereits ausreichend.

Bei der ersten Auswertung lässt sich daher bereits ein Auswerteergebnis erzeugen, das Auskunft darüber gibt, ob eine Pilotsequenz detektiert worden ist. Ist dem der Fall, so findet in einer Ausgestaltung die zweite Auswertung statt, in der mit einer höheren Abtastrate gearbeitet wird. Dies erlaubt es in einer Ausgestaltung, ein positives Auswerteergebnis der ersten Auswertung zu verifizieren. So lässt sich bei der zweiten Auswertung beispielsweise feststellen, ob jedes Symbol der Basissequenz wirklich R-fach vorhanden ist.

In einer Ausgestaltung ist vorgesehen, dass die Signalauswertevorrichtung bei der ersten Auswertung aus dem empfangenen Signal eine reduzierte Pilotsequenz herausarbeitet, die aus einer Anzahl von Symbolen besteht, wobei die Anzahl der Symbole der reduzierten Pilotsequenz gleich einer Anzahl von Symbolen einer Basissequenz ist. Dabei vergleicht die Signalauswertevorrichtung für die Erzeugung des Auswerteergebnisses die herausgearbeitete reduzierte Pilotsequenz mit hinterlegten Basissequenzen (alternative Bezeichnung ist Referenzbasissequenzen). Entspricht die erste Abtastrate der Wiederholrate der Basissequenz-Symbole, so ergibt sich eine reduzierte Pilotsequenz, die im Idealfall gleich der für die Bereitstellung der Pilotsequenz verwendeten Basissequenz ist. Die möglichen Basissequenzen liegen dabei der Signalauswertevorrichtung vor, indem sie in einer Ausgestaltung in einem entsprechenden Datenspeicher hinterlegt worden sind.

Eine Ausgestaltung besteht darin, dass die Signalauswertevorrichtung bei der Verarbeitung von Abtastwerten Korrelationen oder einer Annäherung von Korrelationen mit hinterlegten Basissequenzen ermittelt. Die hinterlegten Basissequenzen sind somit auch die, die üblicherweise für die Generierung der Pilotsequenzen verwendet werden und beispielsweise auch als Referenz-Basissequenzen bezeichnet werden können.

In einer weiteren Ausgestaltung des Empfängers weist der Empfänger eine Verarbeitungsvorrichtung auf. Diese Verarbeitungsvorrichtung kann alternativ oder ergänzend zu der Signalauswertevorrichtung vorhanden sein.

Die Verarbeitungsvorrichtung ist derartig ausgestaltet, die Pilotsequenz des empfangenen Signals in mindestens zwei Teilbereiche aufzuteilen, die sich teilweise überlappen. Die Verarbeitungsvorrichtung korreliert die mindestens zwei Teilbereiche der Pilotsequenz mit Teilbereichen von Referenzsequenzen und erzeugt jeweils ein Teil-Ergebnis. Schließlich erzeugt die Verarbeitungsvorrichtung aus den Teil-Ergebnissen ein Gesamt-Ergebnis hinsichtlich der Pilotsequenz des empfangenen Signals.

In einer Ausgestaltung sind die Referenzsequenzen in einem Datenspeicher hinterlegt.

In einer Ausgestaltung ist vorgesehen, dass die Verarbeitungsvorrichtung die Teil-Ergebnisse inkohärent addiert, um das Gesamt-Ergebnis zu erhalten.

Gemäß einer Ausgestaltung unterzieht die Verarbeitungsvorrichtung vor einer Korrelation die Symbole der mindestens zwei Teilbereiche in Abhängigkeit davon einer Gewichtung, zu wie vielen Teilbereichen die Symbole gehören. Gehören die Symbole somit zu einem Überlappungsbereich, so werden sie anders gewichtet, als in dem Fall, dass sie zu einem nicht überlappenden Bereich gehören.

In einer weiteren Ausgestaltung des Empfängers weist der Empfänger eine Transformationsvorrichtung auf. Diese Transformationsvorrichtung kann alternativ oder ergänzend zu der Signalauswertevorrichtung und/oder der Verarbeitungsvorrichtung vorhanden sein.

Die Transformationsvorrichtung ist derartig ausgestaltet, für mindestens zwei Teilpakete einer Pilotsequenz oder für mindestens zwei Teilpilotsequenzen jeweils separat eine Fourier-Transformierte zu ermitteln. Die Transformationsvorrichtung addiert die ermittelten Fourier-Transformierten inkohärent und erzeugt ein Additionsergebnis. Zudem erzeugt die Transformationsvorrichtung anhand des Additionsergebnisses ein Auswerteergebnis. Das Auswerteergebnis baut in einer Ausgestaltung auf der Anwendung von Referenzsequenzen. In einer Ausgestaltung gilt das Auswerteergebnis hinsichtlich der Pilotsequenz und alternativ hinsichtlich der mindestens zwei Teilpilotsequenzen, die zu einer gemeinsamen Pilotsequenz gehören.

Je nach Ausgestaltung wird somit eine Pilotsequenz in Teilpakete geteilt oder in Form von Teilpilotsequenzen empfangen. So wird z. B. eine vollständige und zusammenhängende Pilotsequenz empfangen und bei der empfängerseitigen Auswertung in Teilsequenzen geteilt.

In einer Ausgestaltung gehören die zwei Teilpakete zu zwei empfangenen Signalen. Der Empfänger empfängt also mindestens zwei Signale, zu denen jeweils mindestens ein Teilpaket gehört.

In einer alternativen Ausgestaltung gehören die zwei Teilpakete zu einem empfangenen Signal.

Gemäß einer Ausgestaltung füllt die Transformationsvorrichtung vor der Ermittlung der Fourier-Transformierten das zu transformierende Teilpaket oder die zu transformierende Teilsequenz mit Nullen am Anfang oder am Ende des Teilpakets bzw. der Teilsequenz auf.

Eine Ausgestaltung sieht vor, dass die Transformationsvorrichtung nach der Ermittlung der Fourier-Transformierten eine Interpolation zwischen einem Maximum und Nachbarstellen des Maximums des zu transformierenden Teilpakets oder der zu transformierenden Teilsequenz vornimmt.

In einer alternativen Ausgestaltung ist vorgesehen, dass die Transformationsvorrichtung nach der Erzeugung des Additionsergebnisses eine Interpolation zwischen einem Maximum und Nachbarstellen des Maximums des zu transformierenden Teilpakets oder der zu transformierenden Teilsequenz vornimmt.

Gemäß einer Ausgestaltung nimmt die Transformationsvorrichtung die Interpolation mit einem Polynom zweiten Grades vor.

Eine Ausgestaltung sieht vor, dass die Transformationsvorrichtung die Interpolation mit einem Polynom folgender Form vornimmt: $y(x) = y_0 - c(x-x_0)^2$,

wobei die freien Parameter $y_0$, c und $x_0$ anhand des Maximums der Nachbarstellen ermittelt sind. Die Parameter werden so gewählt, dass sie jeweils durch das Maximum und die Nachbarstellen verlaufen.

Einen maximalen Wert der Interpolationskurve ermittelt die Transformationsvorrichtung mit folgender Funktion:

$$x_0 = \frac{1}{2} \frac{y(1) - y(-1)}{2y(0) - y(1) - y(-1)},$$

wobei $x_0$ ein Abszissenwert eines Maximums des Polynoms, y(0) das Maximum und y(-1) sowie y(1) die Nachbarstellen sind

Als Interpolationsfunktion wird in einer Ausgestaltung ein Polynom zweiten Grades der Form $y(x) = y_0 - c(X-X_0)^2$ verwendet.

Der Abszissenwert $x_0$ des Polynommaximums stellt beispielsweise den verbesserten Zeitschätzwert dar (normiert auf das Abtastintervall T/N).

Aus dem Abszissenwert $x_0$ des Polynommaximums lässt sich der verbesserte Frequenzschätzwert über

$$\hat{v}T = \frac{i_0 + x_0}{N_{\mathrm{FFT}}} - \begin{cases} 0 & \text{für } i_0 < N_{\mathrm{FFT}}/2 \\ 1 & \text{für } i_0 \geq N_{\mathrm{FFT}}/2 \end{cases}$$

berechnen.

Gemäß einer Ausgestaltung besteht die inkohärente Addition in einer Addition der Beträge oder der Betragsquadrate oder einer Näherung der Beträge der ermittelten Fourier-Transformierten. Eine Näherung eines Betrags besteht z. B. in der Summe aus dem Betrag des Realteils und dem Betrag des Imaginärteils.

Eine Ausgestaltung sieht vor, dass die Transformationsvorrichtung derartig ausgestaltet ist, für eine Auswertung der Pilotsequenz hinsichtlich einer Frequenz und/oder einer Phase eine schnelle Fourier-Transformation oder eine diskrete Fourier-Transformation durchzuführen.

Weiterhin löst die Erfindung die Aufgabe durch ein Verfahren zum Empfangen von mindestens einem Signal, wobei das empfangene Signal hinsichtlich einer Pilotsequenz ausgewertet wird.

Die obigen Ausgestaltungen des Empfängers lassen sich durch Schritte von entsprechenden Ausgestaltungen des Verfahrens realisieren, sodass hier auf eine Wiederholung der Ausführungen verzichtet sei Verfahren des Empfängers gehört ebenfalls nicht zum Schutzumfang der Ansprüche.

In einer Ausgestaltung verfügt das Verfahren über folgende Schritte:

- Das empfangene Signal wird einer ersten Auswertung unterzogen,

  ◦ bei welcher das empfangene Signal mit einer ersten Abtastrate zumindest teilweise abgetastet wird, und/oder
  bei welcher für eine Weiterverarbeitung von Abtastwerten des empfangenen Signals nur jeder i-te Abtastwert verwendet wird, und
  ◦ bei welcher ein Auswerteergebnis bezüglich der Pilotsequenz erzeugt wird,
  ◦ wobei i eine natürliche Zahl größer oder gleich zwei ist.

- In Abhängigkeit von dem Auswerteergebnis wird das empfangene Signal einer zweiten Auswertung unterzogen,

  ◦ bei welcher das empfangene Signal mit einer zweiten Abtastrate zumindest teilweise abgetastet wird, und/oder
  bei welcher für eine Weiterverarbeitung von Abtastwerten des empfangenen Signals nur jeder k-te Abtastwert verwendet wird, und
  ◦ wobei die zweite Abtastrate größer als die erste Abtastrate und/oder k eine natürliche Zahl kleiner als i ist.

In einer alternativen oder ergänzenden Ausgestaltung sind die folgenden Schritte vorgesehen:

- Die Pilotsequenz des Signals wird in mindestens zwei Teilbereiche aufgeteilt, die sich teilweise überlappen.
- Die mindestens zwei Teilbereiche werden mit Teilbereichen von Referenzsequenzen korreliert und es wird jeweils ein Teil-Ergebnis erzeugt.
- Aus den Teil-Ergebnissen wird ein Gesamt-Ergebnis hinsichtlich der Pilotsequenz erzeugt.

In einer ebenfalls alternativen oder ergänzenden Ausgestaltung weist das Verfahren zumindest die folgenden Schritte auf:

- Für mindestens zwei Teilpakete der Pilotsequenz oder für mindestens zwei Teilpilotsequenzen wird jeweils separat eine Fourier-Transformierte ermittelt.
- Die ermittelten Fourier-Transformierten werden inkohärent addiert und es wird ein Additionsergebnis erzeugt.
- Anhand des Additionsergebnisses und anhand von Referenzsequenzen wird ein Auswerteergebnis für die Pilotsequenz erzeugt.

Schließlich bezieht sich die Erfindung auf ein Computerprogramm gemäss Anspruch 17 mit einem Programmcode zur Durchführung des vorgenannten Verfahrens nach einer der Ausgestaltungen.

Im Einzelnen gibt es eine Vielzahl von Möglichkeiten, den Sender, den Empfänger, sowie die entsprechenden Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1     eine schematische Darstellung einer Signalverarbeitung nach der Korrelationsmethode zur Detektion einer Pilotsequenz,

Fig. 2     eine aperiodische Autokorrelationsfunktion einer binären Sequenz 10010111,

Fig. 3     die zeitkontinuierliche Kreuzkorrelationsfunktion der Sequenz 10010111 mit MSK-Modulation und dem Matched Filter der MSK-Modulation,

Fig. 4     eine Darstellung einer Signalverarbeitung bei unbekannten Frequenzablagen,

Fig. 5     eine schematische Darstellung eines Systems mit mehreren Sendern und Empfängern,

Fig. 6     eine bildliche Darstellung des Erzeugens einer Pilotsequenz aus einer Basissequenz,

Fig. 7     ein Diagramm mit dem Betrag der Korrelationsfunktionen bei MSK-Modulation mit Matched Filter-Empfänger bei einer Länge der Pilotsequenz von acht Symbolen,

Fig. 8     ein Diagramm mit dem Betrag der Korrelationsfunktionen bei MSK-Modulation mit Matched Filter-Empfänger bei einer Länge der Pilotsequenz von 12 Symbolen,

Fig. 9     ein Diagramm mit dem Betrag der Korrelationsfunktionen bei MSK-Modulation mit Matched Filter-Empfänger bei einer Länge der Pilotsequenz von acht Symbolen mit Ergänzungssymbolen,

Fig. 10    ein Diagramm mit dem Betrag der Korrelationsfunktionen bei MSK-Modulation mit Matched Filter-Empfänger bei einer Länge der Pilotsequenz von 12 Symbolen mit Ergänzungssymbolen,

Fig. 11    eine schematische Darstellung der Unterteilung einer Pilotsequenz in zwei Teilbereiche ohne Überlapp,

Fig. 12    eine schematische Darstellung der Unterteilung einer Pilotsequenz in zwei Teilbereiche mit Überlapp,

Fig. 13    eine schematische Darstellung der Unterteilung einer Pilotsequenz in drei Teilbereiche mit Überlapp und

Fig. 14    eine schematische Darstellung eines Beispiels einer verwendeten Modulation.

Im Folgenden sei noch einmal auf die Problematiken eines asynchronen Systems zur Datenkommunikation eingegangen. Dabei sendet der Sender jeweils Signale aus, die mit Pilotsequenzen versehen sind. Der Empfänger empfängt Signale und wertet sie in Hinblick auf eine Pilotsequenz aus, d. h. der Empfänger untersucht die empfangenen Signale daraufhin, ob sie Pilotsequenzen aufweisen. Hierfür greift der Empfänger teilweise auf bekannte Referenzsequenzen zurück.

Im Empfänger liegt ein abgetastetes Empfangssignal normalerweise mit einer gewissen Überabtastung vor. Im Empfänger wird für jeden Zeitschritt k des überabgetasteten Signals die Wahrscheinlichkeit bewertet, dass in dem unmittelbar vorausgegangenen Zeitfenster des Empfangssignals eine Synchronisationssequenz vorhanden war. Dazu werden auf die Abtastwerte des Empfangssignals für jeden Zeitschritt eine Funktion $f_{Np}(k)$ angewendet, deren Ausgangswert gegen einen Schwellenwert (sog. "threshold") verglichen wird. Übersteigt der Funktionswert den Schwellenwert, so nimmt man an, dass an dieser Stelle eine Pilotsequenz gesendet wurde. Die theoretischen Grundlagen zu diesem Verfahren werden in der Signalentdeckungstheorie (sog. "detection theory") behandelt (Neyman-Pearson Detektor, [8]).

Zur praktischen Durchführung der Detektion werden bisher Korrelationsverfahren eingesetzt, bei denen das Empfangssignal permanent mit der Pilotsequenz korreliert wird. Zur Detektion wertet man den Betrag des Korrelationsergebnisses aus. Anschließend erfolgt die gerade beschriebene Schwellwertdetektion oder eine Maximum Likelihood (ML)Detektion oder eine Kombination von beiden.

Bei der Auswahl der zu verwendenden Pilotsequenzen wird bisher typischerweise die Autokorrelationsfunktion (AKF) zur Entscheidung herangezogen. Es werden Sequenzen gewählt, bei denen die Nebenkorrelationspeaks der AKF minimal sind und die AKF zu beiden Seiten des Hauptpeaks möglichst steil abfällt. Hierdurch lässt sich der exakte Synchronisationszeitpunkt sehr genau bestimmen. Des Weiteren werden durch die niedrigen Nebenkorrelationspeaks die Zahl der Fehldetektionen an den Stellen dieser Nebenpeaks reduziert.

In der DE 10 2011 082 098 A1 ist ein Verfahren für batteriebetriebene Sender beschrieben, bei dem ein Datenpaket in mehrere Teilpakete unterteilt wird, die jeweils nur einen Bruchteil der gesamten Information übertragen (sog. "Telegram Splitting"). Ein solches Teilpaket wird als "Hop" bezeichnet. In einem Hop werden mehrere Informationssymbole übertragen. Die Hops werden auf einer Frequenz oder aber über mehrere Frequenzen verteilt (sog. "Frequency Hopping") gesendet. Zwischen den Hops gibt es Pausen, in denen nicht gesendet wird.

Solche Hops werden in einer Ausgestaltung von den im Folgenden beschriebenen Sendern bzw. Empfängern ggf. verwendet.

Die in jedem Telegramm vorhandene Pilotsequenz nutzt der Empfänger zur Durchführung der in der allgemeinen Einleitung genannten Themenbereiche: Detektion und Synchronisation.

Die Pilotsequenz besteht aus einer Anzahl von L Modulationssymbolen (auch Pilotsymbole oder hier im Text Pilotsequenz-Symbole genannt) und wird üblicherweise kompakt entweder am Anfang (Präambel) oder in der Mitte (Midambel) des Telegramms übertragen. Alternativ kann die Pilotsequenz aber auch beliebig zwischen die Datensymbole eingestreut werden. Es ist gängige Praxis, die Pilotsymbole demselben Modulationsalphabet wie die Datensymbole zu entnehmen (z. B. multiple phase-shift keying, M-PSK, oder M-ary Quadrature Amplitude Modulation, M-QAM). Die Pilotsymbole sind dem Empfänger vorab bekannt bzw. passend hinterlegt.

Bei Anwendung des Telegrammsplittings, d. h. der Aufteilung eines Telegramms in mehrere Teilpakete (auch Fragmente genannt), enthält jedes Fragment eine eigene Pilotsequenz. Dabei beinhalten die einzelnen Fragmente in der Regel die gleiche Pilotsequenz.

In modernen Empfängern von auf Funk basierenden Systemen ist es übliche Praxis, das Empfangssignal nach einer Bandpassfilterung ins Basisband herunterzumischen und mittels eines Analog-Digital-Konverters (ADC) zeitlich äquidistant abzutasten und zu quantisieren. Jeder Abtastwert ist komplex-wertig und besteht aus einem Real- und einem Imaginärteil. Die Abtastung erfolgt dabei mindestens im Symboltakt oder in der Regel einem ganzzahligen Vielfachen davon (Überabtastung). Ein Ziel der Detektion besteht also darin, in dieser Abtastwertfolge nach dem Signalabschnitt mit der Pilotsequenz zu suchen. Dazu sind verschiedene Methoden bekannt, die im Folgenden kurz beschrieben werden.

Korrelationsmethode bei geringer Frequenzablage

Man korreliert die Folge der Abtastwerte des empfangenen Signals mit der Folge der Symbole bekannter Referenzsequenzen.

Zur Ermittlung eines Korrelationswertes zum Zeitpunkt k entnimmt man dem Empfangssignal den Abtastwert zum Zeitpunkt k sowie die vorausgegangenen L-1 Abtastwerte im Symbolabstand. Bei einer N-fachen Überabtastung wird nur jeder N-te Abtastwert entnommen.

Diese L Werte werden mit den konjugiert komplexen Symbolen der Pilotsequenz multipliziert. Anschließend werden die Produkte aufaddiert. Auf Grund des Betrags des so gewonnenen Korrelationswertes wird entschieden, ob die L Abtastwerte die vollständige Pilotsequenz beinhalten oder nicht. Der Betrag des Korrelationswertes wird deswegen auch Entscheidungsvariable genannt.

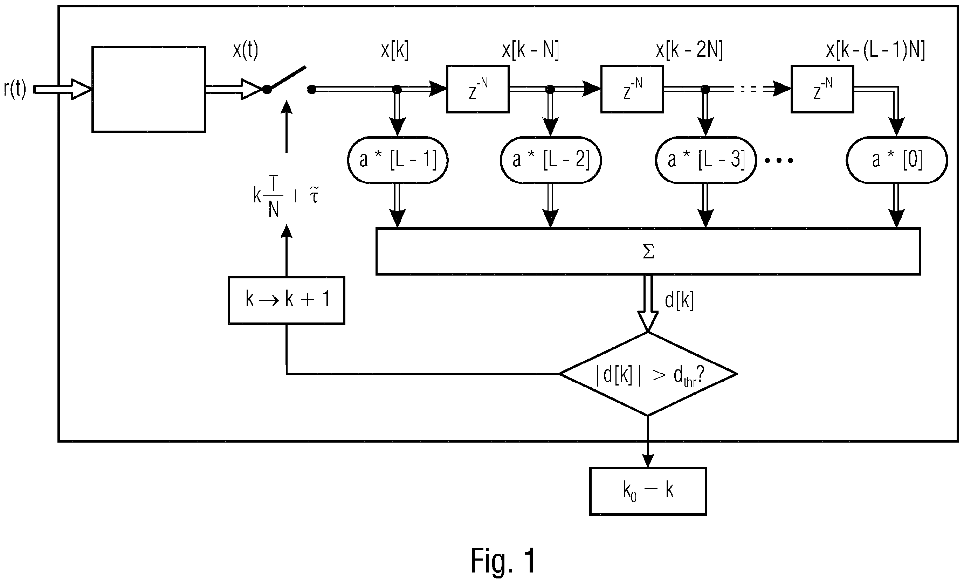

Ein Beispiel einer vollständigen Signalverarbeitung zu einem Abtastzeitpunkt k zeigt Fig. 1.

Dabei werden die empfangenen Signale r(t) zunächst einem Empfangsfilter (z. B. der Optimalfilter, auch als Matched Filter bekannt) unterzogen, um die zeitlich abhängige Funktion x(t) zu erhalten. Das markiert geschätzte Ende der Pilotsequenz wird dabei mit $k_0$ bezeichnet. Weiterhin ist T der Symbolabstand bzw. ist 1/T die Symbolrate. N ist der

Überabtastfaktor. $\tilde{\tau}$ ist die Abweichung vom optimalen Abtastzeitpunkt (d.h. der Zeitfehler) und $k\frac{T}{N} + \bar{\tau}$ ist der Zeitpunkt des k-ten Abtastwertes. Zudem sind a[0], a[1], ..., a[L-1] Pilot-symbole (bzw. Pilotsequenz-Symbole), wobei die Symbole a[0] zuerst und a[L-1] zuletzt gesendet wird. Das hochgestellte Zeichen * zeigt an, dass der konjugiert komplexe Wert zu nehmen ist. Schließlich bezeichnet z$^{-N}$ das Verzögerungselement, das um N Abtastwerte verzögert.

Generell wird folgende Notation verwendet:

- Zeitvariable in runden Klammern sind stets zeitkontinuierlich. Beispielsweise bezeichnet r(t) das zeit-kontinuierliche Empfangssignal.
- Zeitvariable in eckigen Klammern sind stets zeitdiskret und stellen üblicherweise eine fortlaufende Nummerierung von Abtastwerten dar. Beispielsweise bezeichnet x[k] den k-ten Wert des (zeit-kontinuierlichen) Signals x(t) nach dem Empfangsfilter.

Für die Entscheidung, ob eine Pilotsequenz vorliegt, sind im Wesentlichen zwei Methoden bekannt, die häufig nacheinander angewendet werden:

1. Zuerst wird üblicherweise eine Schwellwertdetektion durchgeführt. Dabei wird die Entscheidungsvariable |d[k]| mit einem Schwellwert $d_{thr}$ verglichen. Liegt die Entscheidungsvariable über dem Schwellwert, gilt eine Pilotsequenz als erkannt, und der Zeitindex k markiert den letzten Abtastwert der Sequenz. Damit liegt bereits ein grober Schätzwert für die zeitliche Lage einer Pilotsequenz vor. Dies ist in der Fig. 1 der Fall, wenn $k_0$ = k gesetzt wird. Im negativen Fall wird der Zähler k erhöht: aus k wird k+1.

2. Von einer erkannten Pilotsequenz aus kann optional eine Maximalwertdetektion innerhalb eines vorgegebenen Zeitfensters nach dem Zeitpunkt aus der ersten Detektion herum erfolgen. Dazu wird der Abtastwert mit dem maximalen Betrag der Entscheidungsvariablen als Detektionszeitpunkt verwendet. Das Zeitfenster ist üblicherweise kleiner als die Telegrammdauer. Dieser Schritt erhöht die Genauigkeit der Zeitschätzung, was insbesondere bei Pilotsequenzen mit ungünstigen Korrelationseigenschaften von Vorteil ist.

Wahl der Pilotsequenz:

Bei einem Symbolalphabet mit M Symbolen gibt es $M^L$ mögliche Pilotsequenzen. Bei einem binären Symbolalphabet (M = 2) und einer Pilotsequenzlänge von L = 8 gibt es insgesamt $2^8$ = 256 mögliche Sequenzen.

Für eine Detektion mit der Korrelationsmethode sind die Eigenschaften der aperiodischen Autokorrelationsfunktion (AKF) der Pilotsequenz von zentraler Bedeutung. Mathematisch ist diese definiert durch:

$$AKF[i] = \sum_{l=0}^{L-1} a^*[l] a[l+i] \quad \text{mit } a[l] = 0 \text{ für } l < 1 \text{ oder } l \geq L.$$

Der Maximalwert liegt bei i = 0 und beträgt für alle Sequenzen L. Betrachtet man allein die Detektion der Pilotsequenz, so sind daher alle Sequenzen gleichermaßen geeignet.

Für eine möglichst genaue Zeitschätzung ist es jedoch wünschenswert, wenn die Beträge aller AKF-Werte für i ≠ 0 im Verhältnis zum Maximalwert möglichst klein sind. Diese Werte werden auch Korrelationsnebenspitzen genannt.

Als ideal wird eine AKF bezeichnet, deren Korrelationsnebenspitzen Null sind. Bedauerlicherweise gibt es keine Sequenzen mit idealer AKF.

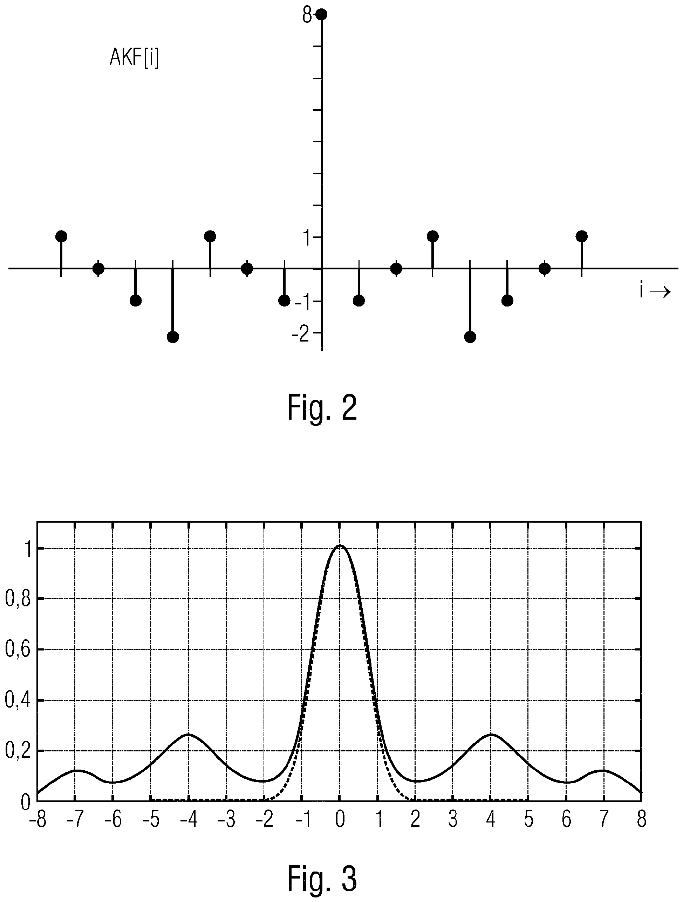

Derzeit ist es gängige Praxis, solche Pilotsequenzen einzusetzen, die möglichst kleine Nebenspitzen aufweisen. Ein Beispiel für eine binäre Sequenz der Länge acht ist 10010111. Bildet man die Bits 0 und 1 auf die Symbole +1 und -1 ab, ergibt sich die AKF der Fig. 2. Dabei ist die AKF[i] auf der y-Achse über i auf der x-Achse aufgetragen. Die Nebenspitzen haben maximal die Amplitude 2.

Des Weiteren ist es üblich, statt der zeitdiskreten AKF die zeitkontinuierliche Kreuzkorrelationsfunktion (KKF) zwischen dem modulierten sowie gefilterten Signal und der AKF der Pilotsequenz zur Auswahl von Pilotsequenzen zu verwenden. Deren Form wird zwar im Wesentlichen von der AKF der Pilotsequenz bestimmt, hängt aber auch vom Modulationsimpuls und der Impulsantwort des Empfangsfilters ab.

Für linear modulierte Signale und solchen, die sich guter Näherung durch linear modulierte Signale darstellen lassen (wie z. B. Minimum Shift Keying, MSK, oder Gaussian Minimum Shift Keying, GMSK), lässt sich zeigen, dass diese Kreuzkorrelationsfunktion in normierter Darstellung gegeben ist durch:

$$KKF(t) = \frac{1}{L} \sum_{l=-L+1}^{L-1} AKF[l] h(t+lT)$$

Darin ergibt sich h(t) aus der Faltung des Modulationsimpulses g(t) mit der Impulsantwort $g_r$(t) des Empfangsfilters.

Für eine genaue Zeitlageschätzung bevorzugt man Sequenzen mit einer KKF, die vor und nach dem Hauptmaximum möglichst nahe an der idealen KKF liegt. Die ideale KKF ergibt sich aus der obigen Formel mit der theoretisch idealen AKF einer Pilotsequenz. Sie hat also die Form des Impulses h(t). Die oben genannte Sequenz 10010111 erfüllt diese Eigenschaft (siehe Fig. 3).

In der Fig. 3 ist auch die ideale KKF für MSK in Verbindung mit einem Matched Filter als gepunktete Linie eingezeichnet. Aufgetragen ist auf der y-Achse die normierte KKF. Auf der x-Achse ist der Zeit-Versatz k aufgetragen. Gezeigt ist somit die zeitkontinuierliche KKF der Sequenz 10010111 mit MSK-Modulation und einem Matched Filter. Die gestrichelte Kurve ist die Funktion h(t).

Detektionsverfahren bei unbekannten Frequenzablagen:

Ein Nachteil der zuvor beschriebenen Korrelationsmethode ist, dass die Detektion nur für sehr kleine Frequenzablagen (also geringen Frequenzdifferenzen zwischen der Trägerfrequenz des Sendesignals und der Mittenfrequenz des Empfangsfilters) zuverlässig ist. Daher werden im Folgenden weitere Methoden beschrieben.

FFT-Verfahren:

In [9] wird ein Verfahren beschrieben, das auch für große Frequenzablagen geeignet ist. Es kann als eine Verallgemeinerung des oben beschriebenen Verfahrens aufgefasst werden. Die wesentlichen Merkmale werden im Folgenden zusammengefasst.

Die Werte x[k-l]a*[L-l+1] aus Fig. 1 werden vor der Summation mit den Abtastwerten einer komplexen Exponentialschwingung multipliziert. Dies wird mehrfach für verschiedene Frequenzen der Schwingung, die als Frequenzhypothesen bezeichnet werden, durchgeführt.

Für jede Frequenzhypothese erhält man eine eigene Entscheidungsvariable |d[k,i]|, die nicht nur von k, sondern auch noch von einem Index i abhängt, wobei i auf eine i-te Frequenz verweist. Von allen zu einem Zeitschritt k ermittelten Entscheidungsvariablen |d[k,i]| wählt man das Maximum aus. Der zugehörige Frequenzindex wird mit $i_0$[k] bezeichnet.

Das Maximum wird anschließend mit einem Schwellwert verglichen. Liegt das Maximum über dem Schwellwert, so gilt eine Pilotsequenz als erkannt, und die Frequenz, die zu dem Index $i_0$[k] gehört, kann als grober Schätzwert für die Frequenzablage verwendet werden.

Für äquidistante Frequenzhypothesen entspricht dies der diskreten Fourier-Transformation (DFT) der L Werte x[k]a*[L-1], x[k-N]a*[L-2] bis x[k-(L-1)N]a*[0].

Die DFT lässt sich besonders effizient in Form der bekannten schnellen Fourier-Transformation (FFT) durchführen, sofern L eine Zweierpotenz ist. Falls L keine Zweierpotenz ist, rundet man die DFT-Länge auf die nächst höhere Zweierpotenz auf und ergänzt die L Werte um entsprechend viele Nullen, sodass eine FFT angewendet werden kann.

Zur Erhöhung der Zuverlässigkeit der Detektion können die L FFT-Eingangswerte noch durch eine beliebige Anzahl von weiteren Nullen ergänzt werden.

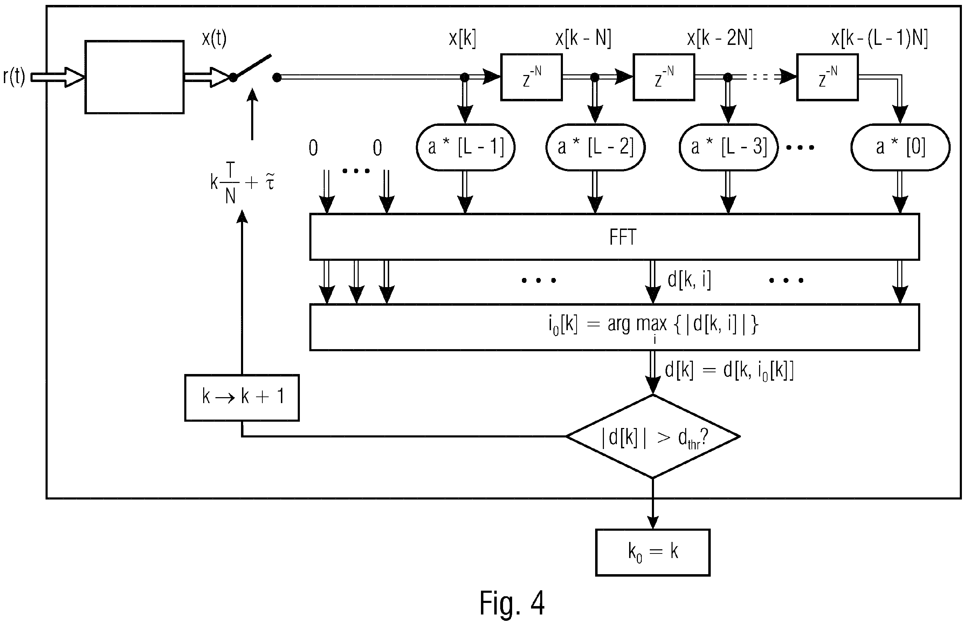

Das Verfahren ist in Fig. 4 dargestellt.

Das Verfahren ist geeignet für Frequenzablagen fast bis zur halben Symbolrate.

Bei Verwendung eines Matched Filters (ein sog. Optimalfilter) ist bei der Frequenzablage 0,5 allerdings ein Energieverlust von ca. 3 dB in Kauf zu nehmen. Dieser Verlust kann durch eine Verbreiterung der Bandbreite des Empfangsfilters (um z. B. den Faktor 1,2) deutlich abgemildert werden. Allerdings hat dies einen gewissen Verlust bei geringen Frequenzablagen zur Folge (bei einer Bandbreitenerweiterung von 1,2 beträgt der Verlust ca. 0,8 dB).

Als Nachteil der FFT-Methode ist der relativ hohe Rechenaufwand zu nennen. Allein für eine FFT sind pro Zeitschritt k im günstigsten Fall (wenn L eine Zweierpotenz ist und keine Nullen eingefügt werden) etwa 5L(1+ldL) Gleitkommaoperationen (FLOPs) durchzuführen [10]. Dies ist deutlich mehr als die 2L FLOPs, die zur Summation in der Korrelationsmethode bei geringem Frequenzoffset erforderlich sind.

Das FFT-Verfahren gilt als theoretisch optimal im Sinne des Neyman-Pearson-Kriteriums [11].

Phasendifferenzkorrelation:

Im Stand der Technik wird weiterhin ein Detektionsverfahren bei unbekanntem Frequenzversatz beschrieben, das einen deutlich geringeren Signalverarbeitungsaufwand aufweist.

Statt der Abtastwerte x[k] verwendet man die Produkte x*[k]x[k-N] jeweils zweier Abtastwerte im Symbolabstand, wobei vom neuesten Wert jeweils der konjugiert komplexe Wert zu nehmen ist.

Entsprechend werden bei dem in der Fig. 1 dargestellten Ablauf die Symbole a[l] durch die Produkte a*[l]a[l-1] ersetzt. Die Summation erstreckt sich dann nur noch über L-1 Werte. Bei erkannter Pilotsequenz ist der Phasenwert der Entscheidungsvariable d[k] ein Maß für die geschätzte Frequenzablage.

Ein Nachteil ist, dass das Signal-zu-Rauschleistungsverhältnis in der Entscheidungsvariablen kleiner als bei der FFT-Methode ist. Es besteht also eine höhere Wahrscheinlichkeit, dass eine Pilotsequenz nicht erkannt wird.

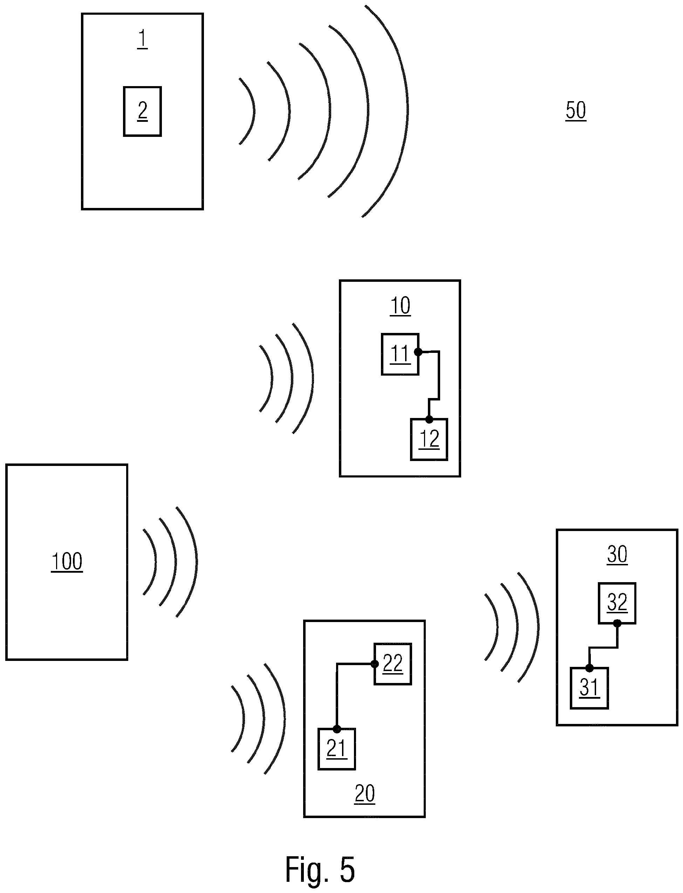

Die Fig. 5 zeigt ein System 50, in dem von hier zwei Sendern 1, 100 Signale ausgesendet und von drei Empfängern 10, 20, 30 empfangen werden. Die Signale werden dabei mit Pilotsequenzen ausgestrahlt, sodass die Empfänger 10, 20, 30 entsprechend ausgestaltet sind, um in den von ihnen empfangenen Signalen Pilotsequenzen zu detektieren. Hierfür greifen die Empfänger 10, 20, 30 jeweils auf Referenzsequenzen zurück.

Ein Sender 100 ist ein Sender nach dem Stand der Technik, der Signale mit Pilotsequenzen aussendet. Solche Signale gemäß dem Stand der Technik können insbesondere von zwei der drei dargestellten Empfänger 20, 30 empfangen und optimal verarbeitet werden.

Der andere Sender 1 sendet Signale aus, deren Pilotsequenzen auf Basissequenzen beruhen. Um den Vorteil dieser Art von Pilotsequenzen auszunutzen, ist insbesondere der mit dem Bezugszeichen 10 bezeichnete Empfänger ausgestaltet.

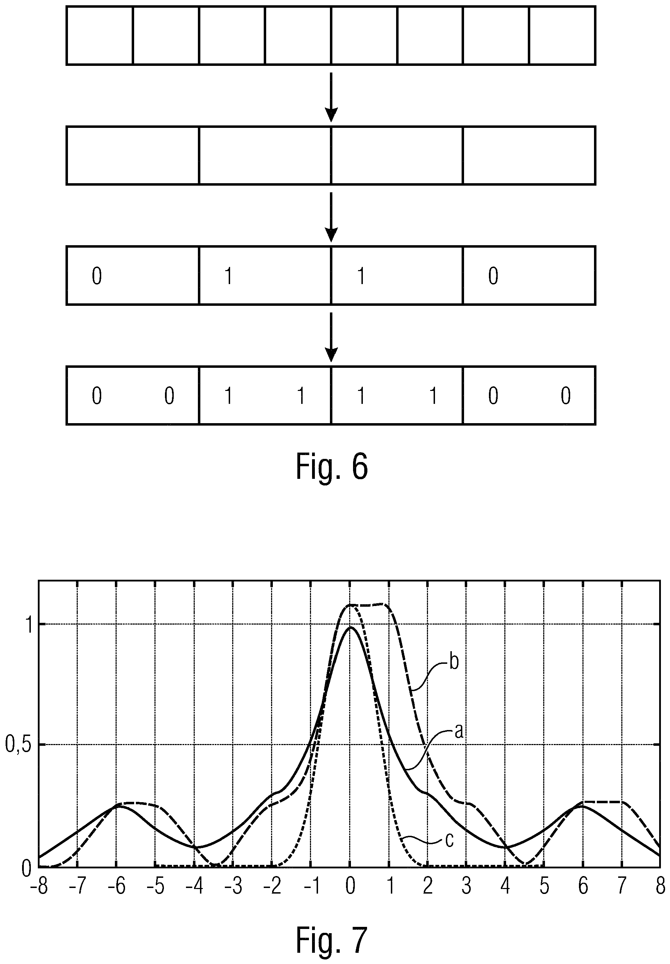

Der Sender 1 verfügt über einen Signalgenerator 2, der die auszusenden Signale generiert und dessen Eigenschaften insbesondere bezogen auf die Bereitstellung der jeweiligen Pilotsequenz im Folgenden in Verbindung mit der Fig. 6 beschrieben werden. Insbesondere ergeben sich Pilotsequenzen mit Symbolwiederholung. Die auszusendenden Signale umfassen beispielsweise neben der jeweiligen Pilotsequenz auch Daten, die z. B. von Sensoren stammen oder die Eigenschaften des Senders betreffen usw.

In der Fig. 6 ist in der obersten Reihe schematisch eine Pilotsequenz mit acht Symbolen dargestellt, d. h. für die Länge L gilt: L = 8. Diese Pilotsequenz soll aus einer Basissequenz erzeugt werden, die mehrere Basissequenz-Symbole aufweist.

Die Generierung der Pilotsequenz erfolgt derartig, dass die Basissequenz-Symbole mehrfach hintereinander wiederholt werden. In dem gezeigten Beispiel soll jedes Basissequenz-Symbol einmal wiederholt werden. Alternativ lässt sich formulieren, dass jedes Basissequenz-Symbol zweimal hintereinander als Pilotsequenz-Symbol erscheint. Bei (R-1) Wiederholungen ist jedes Basissequenz-Symbol R-mal vorhanden. Hier gilt: R = 2.

Um daher acht Pilotsequenz-Symbole zu erhalten, sind bei einer Wiederholung vier Basissequenz-Symbole erforderlich (L/R = 8/2 = 4). Die Basissequenz hat also eine Länge von vier. Die binären Basissequenz-Symbole sind in dem Beispiel in folgender Reihenfolge gegeben: 0110. Diese Basissequenz-Symbole sind in der dritten Reihe der Fig. 6 eingetragen. Gemäß der obigen Notation sind die Symbole somit: a[0] = 0; a[1] = 1; a[2] = 1 und a[3] = 0.

Durch die Verdopplung der Basissequenz-Symbole ergibt sich die Pilotsequenz, wie sie in der unteren Reihe dargestellt ist, zu: 00111100.

In einer Ausgestaltung werden die einzelnen, entsprechend oft wiederholten Basissequenz-Symbole - insbesondere nach einem Mapping, z. B. BPSK - noch mit einem Phasenfaktor versehen.

Bei einer Länge der Pilotsequenz von acht Symbolen zeichnen sich folgende Basissequenzen durch eine vorteilhafte Autokorrelation aus, die die Auswertung deutlich vereinfacht. Dies sind die Basissequenzen:

0010,
1101,
0100,
1011.

Daraus ergeben sich die folgenden vier Sequenzen:

00001100,
11110011,
00110000,
11001111

Fügt man jeweils einen Phasenfaktor (in dem Beispiel jeweils 180°) hinzu, wobei die Reihenfolge der Phasenfaktoren innerhalb der Symbolblöcke, die sich durch die Wiederholungen der Basissequenz-Symbole ergeben, gleich sind, so erhält man in einer Ausgestaltung nach einem anschließenden umgekehrten Mapping folgende Pilotsequenzen:

01011001,
10100110,
10011010,
01100101.

Der Zwischenschritt wird im Folgenden über komplexe Symbole verdeutlicht.

Die Fig. 7 zeigt den Betrag der Korrelationsfunktionen bei MSK-Modulation mit Matched Filter-Empfänger. Die Linie a ist die volle Korrelation. Die Linie b ist die partielle Korrelation mit R = 2. Die gepunktete Linie c ist die AKF des MSK-Grundimpulses. Dabei ist der Wert $|\varepsilon_v|_{max}$ die maximale systematische Frequenzschätzablage unter Verwendung der vollen Korrelation, wobei ein Abtastzeitfehler von -0.5T bis +0.5T und eine Frequenzablage von vT des Empfangssignals zwischen -0.4 bis +0.4 berücksichtigt wurde. In dem Beispiel der Fig. 7 beträgt der Wert jeweils 0,027.

Für eine Länge der Pilotsequenz von L = 12 mit einer Wiederholung der Basissequenz-Symbole sind folgende Basissequenzen vorteilhaft:

000101,
001011,
001101,
010001.

Durch die Phasenfaktoren ergeben sich insbesondere die folgenden vorteilhaften Pilotsequenzen:

| Basissequenz a[0... 5] | Gesamtsequenz oder Pilotsequenz a[0... 11] | $|\varepsilon v|_{max}$ |
|---|---|---|
| 000101 | 000000110011<br>111111001100<br>110011000000<br>001100111111 | 0,022 |
|  | 010101100110<br>101010011001<br>011001101010<br>100110010101 | 0,022 |
| 001011 | 000011001111<br>111100110000 | 0,0046 |
|  | 010110011010<br>101001100101 | 0,0046 |
| 001101 | 000011110011<br>111100001100<br>110011110000<br>001100001111 | 0,015 |
|  | 010110100110<br>101001011001<br>011001011010<br>100110100101 | 0,015 |
| 010001 | 001100000011<br>110011111100<br>110000001100<br>001111110011 | 0,0085 |
|  | 011001010110<br>100110101001<br>011010100110<br>100101011001 | 0,0085 |

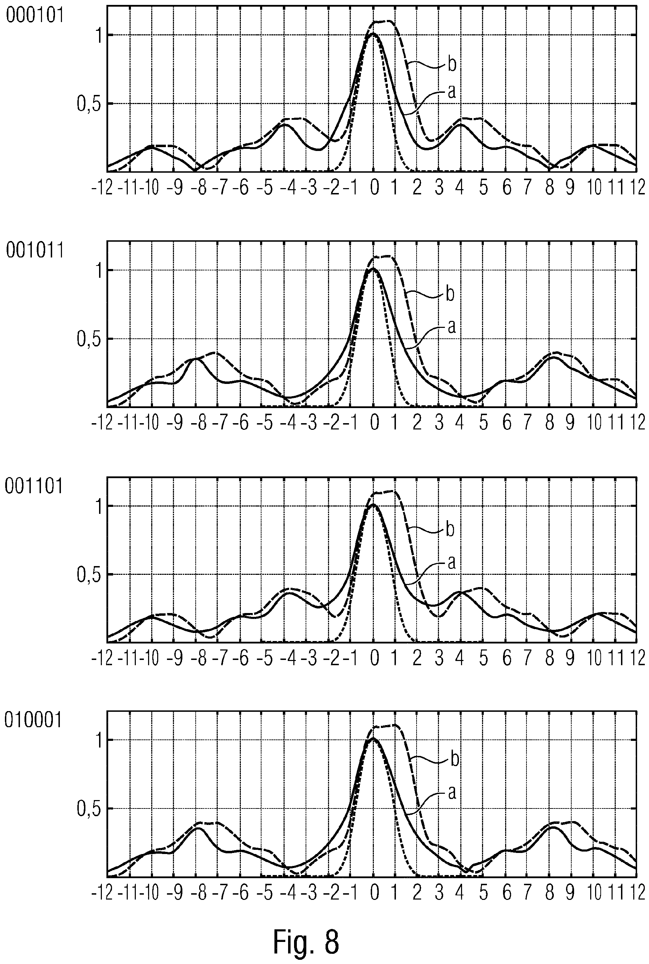

Die Fig. 8 zeigt ähnlich wie die Fig. 7 den Betrag der Korrelationsfunktionen der vier Basissequenzen, wobei die zugehörige Basissequenz jeweils neben dem Diagramm steht. Markiert ist jeweils eine Linie a der vollen Korrelation sowie die Linie b der partiellen Korrelation mit R = 2. Die gepunktete Linie ist jeweils die AKF des MSK-Grundimpulses.

In einer Ausgestaltung werden somit Pilotsequenzen mit folgender Eigenschaft verwendet:
Innerhalb von Teilsequenzen der Pilotsequenz mit je R Pilotsymbolen befinden sich Symbole, die bis auf einen Phasenfaktor $e^{j\varphi}$ identisch sind. Dabei ist der Phasenfaktor für das erste wiederholte Symbol in allen Teilsequenzen gleich. Ebenso ist er für die zweite Wiederholung in allen Teilsequenzen gleich, usw. In einer Ausgestaltung ist der Phasenfaktor für verschiedene Wiederholungen unterschiedlich und in einer anderen Ausgestaltung identisch. Dabei ist R ein Teiler von L. Bevorzugt sind Phasenfaktoren, die Bestandteil des Modulationsalphabets sind (bei Quadrature Phase-Shift Keying, QPSK, z. B. "1, j, -1, -j", was den Phasenfaktoren 0°, 90°, 180° und 270° entspricht).

Anschließend werden die Daten in einer Ausgestaltung vor dem Einbringen eines Phasenfaktors mit dem Modulationsalphabet gemappt. Dabei handelt es sich beispielsweise um eine BPSK (binäre PSK).

In dem Beispiel der Fig. 6 sind die Basissymbole als [0, 1, 1, 0] festgelegt, sodass nach einer BPSK (also mit der Mapping, dass aus einer 0 eine -1 und aus einer 1 eine +1 wird) die Symbole lauten: [-1, -1, +1, +1, +1, +1, -1, -1].

Wird der erwähnte Phasenfaktor für die Symbolwiederholung eingefügt werden, der hier 90° beträgt, so ergibt sich als Pilotsequenz: [-1, -j, +1, $^+$j, +1, $^+$j, -1, -j]].

Diese Art von Pilotsequenz bietet den großen Vorteil, dass bei einer Detektion mit Unterabtastung (siehe in den Figuren 7 bis 10 jeweils die Linie b) eine Zeitinvarianz über die Wiederhollänge R erreicht wird. Damit lässt sich der Rechenaufwand der Detektion im Empfänger deutlich verringern.

Konstruieren lässt sich die Pilotsequenz z. B. dadurch, dass man eine Basissequenz der Länge L/R auswählt und jedes Symbol (R-1)-mal wiederholt. Die r-te Wiederholung (r = 1, 2, ..., R-1) in jeder Teilsequenz wird in einer Ausgestaltung mit einem Phasenfaktor multipliziert, wobei $\varphi_r$ zwischen 0 und $2\pi$ frei wählbar ist.

Ein Vorteil gegenüber den bisher im Stand der Technik verwendeten Pilotsequenzen besteht darin, dass zur Detektion Verfahren mit deutlich reduziertem Signalverarbeitungsaufwand eingesetzt werden können.

Nachteilig ist die eingeschränkte Sequenzauswahl. Dabei lassen sich auch die AKF-Eigenschaften der gesamten Pilotsequenz weniger optimal als bei freien Wahl aller Symbole einstellen. Erfahrungsgemäß sind die Auswirkungen auf die Frequenz-, Zeit- und Phasenschätzung jedoch als vernachlässigbar einzustufen.

Um die Detektion der Pilotsequenzen auf der Seite der Empfänger weiter zu verbessern, werden in einer zusätzlichen Ausgestaltung vom Signalgenerator 2 (vgl. Fig. 5) die Pilotsequenzen mit Ergänzungssymbolen bereitgestellt, die den Symbolblöcken der Wiederholungen der Basissequenz-Symbolen vorangestellt und/oder nachgestellt werden. Es ergeben sich somit Pilotsequenzen mit Symbolwiederholung, denen Symbol(e) vorangestellt und/oder angehängt werden.

In einer Ausgestaltung ist vorgesehen, dass eine Teilsequenz der Länge L-1 bzw. L-2 aus der gesamten zu generierenden Pilotsequenz der Länge L die zuvor beschriebenen Eigenschaften aufweist. Voraussetzung ist, dass R als Anzahl der Basissequenz-Symbole pro Symbolblock ein Teiler von L-1 bzw. L-2 ist.

Um die Pilotsequenzen mit den Ergänzungssymbolen zu konstruieren, werden die Symbole einer Basissequenz der Länge (L-1)/R bzw. (L-2)/R jeweils (R-1)-fach wiederholt, sodass die Symbole R-fach vorhanden sind. Anschließend wird ein Ergänzungssymbol oder werden mehrere (wenigstens zwei) Ergänzungssymbole vorangestellt oder nachgestellt.

Ein Vorteil besteht darin, dass durch die freie Wahl eines Randsymbols bzw. zweier Randsymbole (als alternative Bezeichnung für Ergänzungssymbol) sich die AKF-Eigenschaften der gesamten Pilotsequenz besser den idealen Eigenschaften anpassen lassen.

Ein Nachteil besteht darin, dass der Anteil der Basissequenz an der gesamten Pilotsequenz geringer wird. Dies geht bei einer Unterabtastung beim Empfänger (siehe im Folgenden) mit einem Verlust im Signal-Rauschen-Verhältnis einher.

Werden bei einer Gesamtlänge von L Symbolen einer Pilotsequenz somit allgemein x Ergänzungssymbole verwendet, so hat entsprechend eine Teilsequenz der Länge (L-x) die Eigenschaft, dass sie sich aus den wiederholten Basissequenz-Symbolen ergibt.

In den folgenden Ausführungsbeispielen handelt es sich jeweils um zwei Ergänzungssymbole, die insgesamt die Form 11, 00, 01 oder 10 haben. Dabei werden entweder beide Ergänzungssymbole den Symbolblöcken vorangestellt oder beide folgen den Symbolblöcken oder ein Ergänzungssymbol wird vorangestellt und das andere Ergänzungssymbol wird nachgestellt.

Durch die Ergänzungssymbole reduziert sich bei der vorgegebenen Länge der Pilotsequenzen gleichzeitig die Anzahl der Symbole der Basissequenzen.

Für eine Länge der Pilotsequenz mit L = 8 mit einmaliger Wiederholung jedes Basissequenz-Symbols (also R = 2) und zwei Ergänzungssymbolen sind drei Basissequenz-Symbole erforderlich, die in einer Ausgestaltung folgende Form haben: 001. Mit den Ergänzungssymbolen 01, 10, 00 und 11 und den Phasenfaktoren ergeben sich folgende vorteilhafte Pilotsequenzen, wobei die Ergänzungssymbole jeweils durch einen senkrechten Strich von dem eigentlichen Kern der Pilotsequenz, der durch die Symbolblöcke gebildet wird, abgetrennt sind:

| Basissequenz $a[0...2]$ | Gesamtsequenz $a[0...7]$ | $\|\varepsilon v\|_{max}$ |
|---|---|---|
| 001 | 000011\|01<br>111100\|10<br>10\|110000<br>01\|001111 | 0,037 |
| | 010110\|00<br>101001\|11<br>00\|011010<br>11\|100101 | 0,037 |
| 001 | 011000011<br>10\|111100<br>110000\|10<br>001111\|01 | 0,024 |
| | 00\|010110<br>11\|101001<br>011010\|00<br>100101\|11 | 0,024 |
| 001 | 1\|000011\|0<br>0\|111100\|1<br>0\|110000\|1<br>1\|001111\|0 | 0,011 |
| | 0\|010110\|0<br>1\|101001\|1<br>0\|011010\|0<br>1\|100101\|1 | 0,011 |

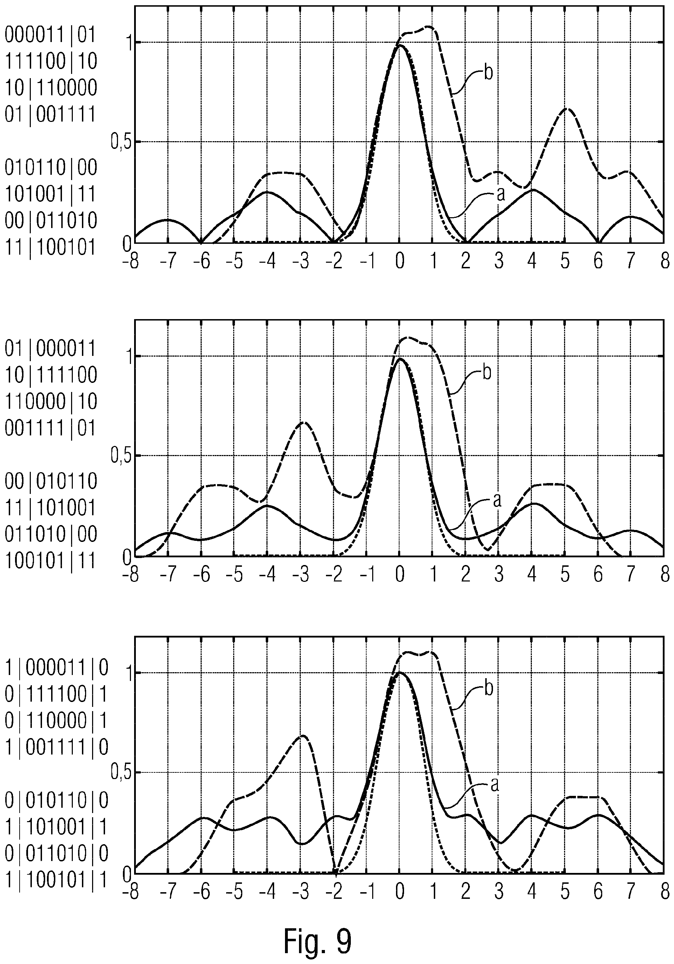

Die Fig. 9 zeigt den jeweiligen Betrag der Korrelationsfunktionen, wobei die zugehörigen Pilotsequenzen jeweils neben dem Diagramm steht. Markiert ist jeweils eine Linie a der vollen Korrelation sowie die Linie b der partiellen Korrelation mit R = 2. Die gepunktete Linie ist jeweils die AKF des MSK-Grundimpulses.

Für eine Länge der Pilotsequenz mit L = 12 bei einer einmaligen Wiederholung jedes Basissequenz-Symbols (daher R = 2) und zwei Ergänzungssymbolen, sind fünf Basissequenz-Symbole erforderlich, die in einer Ausgestaltung folgende Form haben: 00010 (d. h. für die Basissequenz-Symbole: a[0] = a[1] = a[2] =0; a[3] = 1; a[4] = 0). Mit den Ergänzungssymbolen 01, 10, 00 und 11 und den Phasenfaktoren ergeben sich folgende Pilotsequenzen, wobei die Ergänzungssymbole wie zuvor durch einen senkrechten Strich von den Symbolblöcken abgetrennt sind:

| Basissequenz $a[0...4]$ | Gesamtsequenz = Pilotsequenz $a[0...11]$ | $\|\varepsilon v\|_{max}$ |
|---|---|---|
| 00010 | 1\|0000001100\|1<br>0\|1111110011\|0<br>1\|0011000000\|1<br>0\|1100111111\|0 | 0,012 |
| | 0\|0101011001\|1<br>1\|1010100110\|0<br>1\|1001101010\|0<br>0\|0110010101\|1 | 0,012 |

(fortgesetzt)

| Basissequenz $a[0...4]$ | Gesamtsequenz = Pilotsequenz $a[0...11]$ | $|\varepsilon v|_{max}$ |
|---|---|---|
| | 0000001100\|10 <br> 1111110011\|01 <br> 01\|0011000000 <br> 10\|1100111111 | 0,025 |
| | 0101011001\|11 <br> 1010100110\|00 <br> 11\|1001101010 <br> 00\|0110010101 | 0,025 |
| | 01\|0000001100 <br> 10\|1111110011 <br> 0011000000\|10 <br> 1100111111\|01 | 0,010 |
| | 00\|0101011001 <br> 11\|1010100110 <br> 1001101010\|00 <br> 0110010101\|11 | 0,010 |

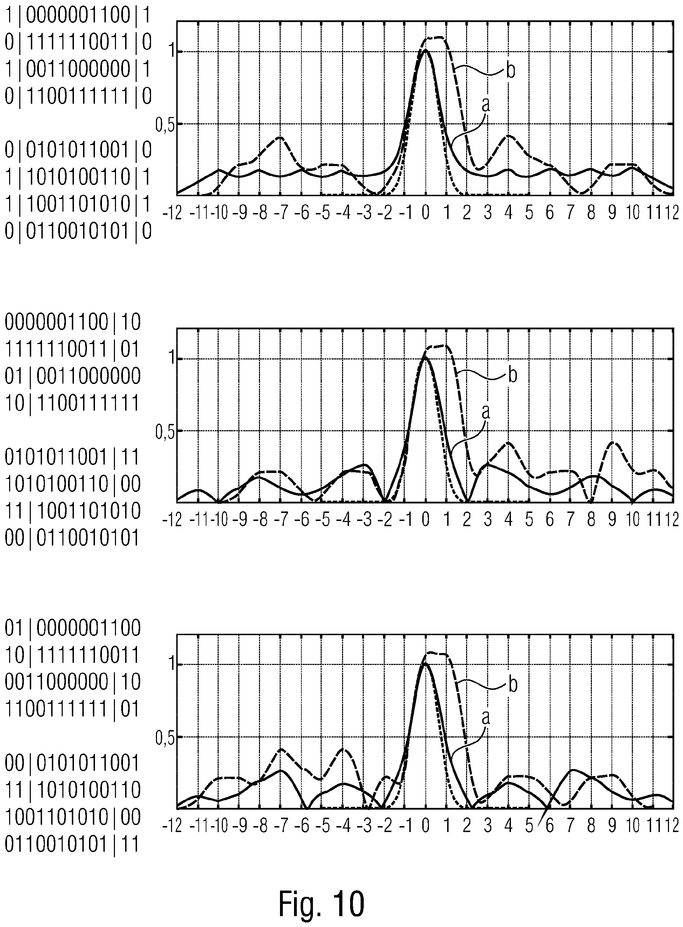

Die Fig. 10 zeigt den Betrag der Korrelationsfunktionen, wobei die zugehörigen Pilotsequenzen jeweils neben dem Diagramm steht. Markiert sind eine Linie a der vollen Korrelation sowie eine Linie b der partiellen Korrelation mit R = 2. Die gepunktete Linie ist jeweils die AKF des MSK-Grundimpulses.

Im Folgenden wird weiter das System der Fig. 5 und werden insbesondere die dort gezeigten Empfänger 10, 20, 30 beschrieben.

Der zu dem beschriebenen Sender 1 passende Empfänger 10 der Fig. 5 verfügt über eine Signalauswertevorrichtung 11, die hier Zugriff auf einen internen Datenspeicher 12 hat.

Die Signalauswertevorrichtung 11 führt zunächst eine erste Auswertung der empfangenen Signale aus. Ist z. B. bekannt, dass der Sender 1 die Symbole der Basissequenz jeweils einfach wiederholt, so tastet die Signalauswertevorrichtung 11 nur jeden zweiten Punkt des empfangenen Signals ab bzw. wertet nur jeden zweiten Abtastwert bzw. nur Abtastwerte im halben Symboltakt aus (bei einer höheren Abtastrate wird weniger als jede zweite Abtastung verwendet). Es ergibt sich somit eine reduzierte Pilotsequenz, die die Signalauswertevorrichtung 11 mit in dem Datenspeicher 12 hinterlegten Basissequenzen vergleicht (in einer Ausgestaltung durch eine Kreuzkorrelation). Hierdurch ergibt sich ein Auswerteergebnis, das Aussage darüber gibt, ob die reduzierte Pilotsequenz mit einer Basissequenz übereinstimmt, d. h. ob überhaupt eine Pilotsequenz vorhanden ist.

Im positiven Fall unterzieht die Signalauswertevorrichtung 11 das empfangene Signal einer erneuten und hier insbesondere zweiten Auswertung, in welcher noch einmal überprüft wird, ob eine Pilotsequenz vorliegt. Dafür wird die Abtastrate erhöht bzw. werden mehr Abtastwerte ausgewertet.

Insgesamt findet somit eine Reduktion der Korrelationsrate zur kontinuierlichen Detektion einer Pilotsequenz statt.

Es wird dabei in einer Ausgestaltung zur Detektion einer Pilotsequenz eine Modifikation der bekannten Methoden (z. B. Korrelationsmethode bei geringer Frequenzablage oder FFT-Verfahren bei unbekannter Frequenzablage) vorgenommen, die folgende Merkmale aufweist:

Die Korrelation wird nur für jeden RN-ten (dabei ist N der Überabtastfaktor und R eine natürliche Zahl, die gleich dem Auftreten der Symbole der Basissequenz ist bzw. gleich der Anzahl der Wiederholungen + 1) Abtastwert der Abtastwertfolge durchgeführt. Zudem wird nur jeder RN-te Wert des gefilterten Empfangssignals zur Berechnung der Entscheidungsvariablen verwendet.

Die Korrelationslänge wird auf die Länge der in der Pilotsequenz enthaltenen Basissequenz reduziert. Für die oben beschriebenen Pilotsequenzen reduziert sich die Korrelation auf L/R Werte. Für die Pilotsequenzen mit Ergänzungssymbolen reduziert sie sich auf (L-1)/R bzw. (L-2)/R Symbole oder allgemein auf (L-x)/R Symbole bei x Ergänzungssymbolen.

Ein Vorteil ist die Reduktion des Signalverarbeitungsaufwands gegenüber einer vollen Korrelation bei N-facher Überabtastung.

Für die im Stand der Technik beschriebene Korrelationsmethode (z. B. Korrelationsmethode bei geringer Frequenzablage) reduziert sich der Aufwand (gemessen in reellwertigen Fließkomma-Operationen) etwa um den Faktor $1/(NR^2)$. Für N = 2 und R = 2 beträgt der Reduktionsfaktor z. B. $1/(2*2^2) = 1/8$.

Für die im Stand der Technik beschriebene FFT-Methode reduziert sich der Aufwand bei Verwendung einer FFT der Länge L bzw. L/R bei Korrelation mit der Basissequenz etwa um den Faktor $1/(NR^2) * \{1 - 5ld(R)/(9+5ld(L))\}$. Für N = 2, R = 2 und L = 8 beträgt der Reduktionsfaktor z. B. 1/10.

Ein Nachteil besteht darin, dass ein gewisser Verlust im Nutz-zu-Rauschleistungsverhältnis (SNR) in der Entscheidungsvariablen in Kauf zu nehmen ist, da man mit einer geringeren Anzahl von Symbolen korreliert. Der Verlust beträgt für Sequenzen ohne Ergänzungssymbole etwa 10logR dB, also ca. 3 dB bei R = 2. Diesen Nachteil kann man durch Verwendung entsprechend längerer (genau R-mal so langer) Pilotsequenzen kompensieren oder es werden mehrere Teilsequenzen eingesetzt.

Es ist empfehlenswert, die genaue Schätzung von Frequenzablage, optimalem Abtastzeitpunkten und Phase in einem zweiten Schritt nach der Detektion auf Basis der vollen Pilotsequenz mit N-facher Überabtastung durchzuführen, wobei in der Regel N = 2 ausreicht. Um nach der Detektion auf die Abtastwerte zugreifen zu können, ist in einer Ausgestaltung eine Abtastung mit Überabtastfaktor N bereits während der Detektionsphase erforderlich. Daraus ergibt sich, dass der ADC permanent mit einer Abtastrate von N/T Werten pro Sekunde abtastet. Während der Detektionsphase reduziert sich also primär der Signalverarbeitungsaufwand .

Der Empfänger 20 der Fig. 5 verfügt über eine Verarbeitungsvorrichtung 21. Die Verarbeitungsvorrichtung 21 ist derartig ausgestaltet, die Pilotsequenz des empfangenen Signals in mindestens zwei Teilbereiche aufzuteilen, die sich teilweise überlappen. Jeder Teilbereich wird mit Teilbereichen von Referenzsequenzen, die in dem Datenspeicher 22 abgelegt sind, korreliert. Die sich ergebenden Teil-Ergebnisse werden zu einem Gesamt-Ergebnis hinsichtlich der Pilotsequenz des empfangenen Signals kombiniert.

In dieser Ausgestaltung wird somit die partielle Korrelation erweitert.

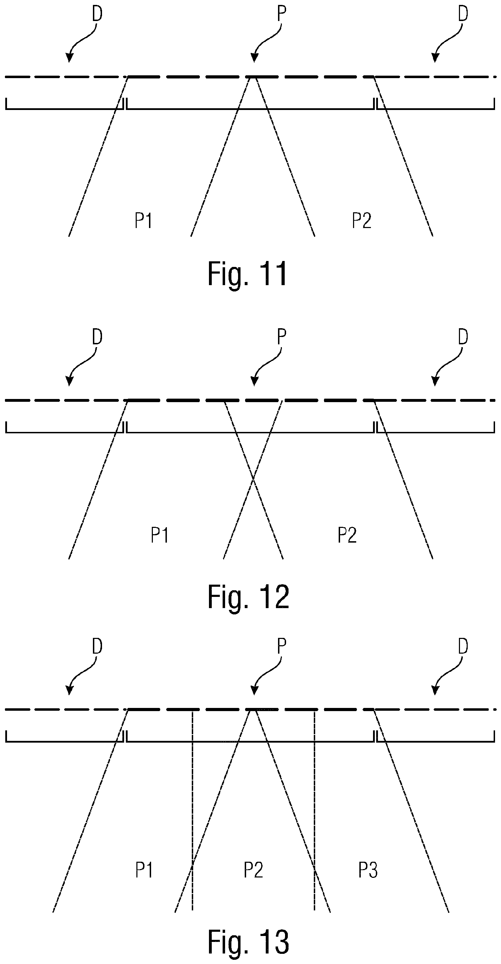

In [3] ist ein Verfahren zur verbesserten Detektion unter Frequenzoffsets eines Telegramms mit mehreren (Teil-)Pilotsequenzen beschrieben. Dabei wird eine Pilotsequenz in mehrere Teilbereiche unterteilt, wobei für jeden Teilbereich eine eigene Korrelation durchgeführt wird. Die Unterteilung der Pilotsequenz in einzelne Teilbereiche oder TeilSequenzen zeigt die Fig. 11.

In der Fig. 11 befindet sich eine mit P bezeichnete Pilotsequenz zwischen zwei mit D bezeichneten Datensequenzen. Die Pilotsequenz wird in zwei diskunkte Teilbereiche P1 und P2 aufgeteilt und der weiteren Auswertung zugeführt.

Bei dieser Methode wird jedoch ein Teil der Information verworfen, welcher zwischen den beiden Teilbereichen P1, P2 liegt.

Zur Verbesserung der Detektionsfähigkeit werden einander überlagernde Bereiche definiert. So werden beispielsweise in Fig. 12 die beiden Pilotsequenz-Teile aus Fig. 11 mit einem Überlapp definiert. Die Länge der beiden Pilotsequenz-Teile vergrößert sich hierdurch.

Durch die Verlängerung der beiden Teile steigt jedoch die Anfälligkeit der Detektion gegenüber Frequenzoffsets. Um eine gleichbleibende Performance gegenüber Frequenzoffsets zu erhalten, muss die Länge der Pilotsequenz-Teile gleich bleiben.

Dies wird z. B. in der Fig. 13 dadurch realisiert, dass die Pilotsequenz in mehr als zwei Teilbereiche unterteilt wird. In der dargestellten Ausgestaltung handelt es sich um drei Teilbereiche: P1, P2 und P3.

Die Teilergebnisse werden inkohärent addiert, sodass Frequenzoffsets einen kleineren Einfluss haben.

In einer weiteren Ausgestaltung wird eine Normierung des Überlappbereichs bei partieller Korrelation vorgenommen.

Durch die zuvor beschriebene Ausgestaltung verbessert sich die Performance der Korrelation im Vergleich zur in [3] beschriebenen Methode gegen das Rauschen. Treten jedoch Störungen im Kanal, in dem die Signale übertragen werden, auf, so zeigt sich ein negativer Effekt, welcher durch die Überlappbereiche entsteht.

Jedes Symbol innerhalb eines Überlappungsbereiches wird mindestens zweimal in einer Korrelation verwendet, Symbole außerhalb der Überlappungsbereiche jedoch nur einmal. Somit werden Symbole innerhalb der Überlappungsbereiche höher gewichtet als die Symbole außerhalb. Fällt ein Störer innerhalb eines Überlappungsbereiches, hat er somit einen größeren Einfluss als in dem Fall, dass er den Überlappungsbereich nicht trifft.

Um diese Problematik zu umgehen, werden in einer Ausgestaltung die Symbole innerhalb eines Überlappungsbereiches durch eine Normierung schwächer gewichtet bzw. werden Symbole außerhalb der Bereiche stärker gewichtet. Die Gewichtung hängt damit davon ab, zu wie vielen Teilbereichen ein Symbol gehört.

Die Gewichtungsfaktoren sind dabei abhängig von der Anzahl der gewählten Teilbereiche und den Überlappbereichen.

Der mit dem Bezugszeichen 30 bezeichnete Empfänger 30 weist eine Transformationsvorrichtung auf, die für mindestens zwei Teilpilotsequenzen einer gemeinsamen Pilotsequenz oder für mindestens zwei Teilpakete der Pilotsequenz jeweils separat eine Fourier-Transformierte ermittelt. Die Teilpakete sind dabei überlappend oder disjunkt.

Die Transformationsvorrichtung 31 addiert die ermittelten Fourier-Transformierten inkohärent und erzeugt mithilfe der hier in einem Datenspeicher 32 hinterlegten Referenzsequenzen ein Additionsergebnis. Das Additionsergebnis erlaubt dann, ein Auswerteergebnis für die Pilotsequenz zu erzeugen.

Dabei handelt es sich in einer Ausgestaltung um eine optimierte Detektion mit der DFT-Methode in Kombination mit partieller Korrelation und daher um eine Optimierung der in Fig. 4 gezeigten Methode.

Das Grundprinzip der Verarbeitung des Empfängers 30 wird folgend diskutiert.

Im Stand der Technik ist ein FFT-Verfahren (DFT-Methode) beschrieben, welches es mit geringem Rechenaufwand ermöglicht, eine Detektion der Pilotsequenz bei unbekanntem Frequenzoffset im Bereich von +-0.5 mal der Symbolrate durchzuführen.

Ein Nachteil der DFT-Methode ist, dass sie nicht bei der partiellen Korrelation oder mit einer verteilten Synchronisationssequenz angewendet werden kann. Dieses Problem umgeht der angesprochene Empfänger 30.

Anstelle der Berechnung der DFT (FFT) über die gesamte Synchronisationssequenz durchzuführen, werden für alle Teilsequenzen der partiellen Korrelation (also der Teilpakete der Pilotsequenz) eigenständige DFTs oder FFTs berechnet. Das Gesamtergebnis für die Detektion ergibt sich aus der nicht-kohärenten Addition der Frequenzlinien der Einzel-FFTs oder -DFTs. Beispiele für die nicht-kohärente Addition sind die Betragsaddition, die Betragsquadrataddition oder eine Annäherung dieser Methodik.

Als Vorteil ergibt sich, dass durch die Verwendung einer FFT die "Korrelation" parallel auf mehreren Frequenzen durchgeführt wird.

Bei genauerer Betrachtung der FFT (DFT) Operation zeigt sich, dass eine FFT eine Frequenzverschiebung (parallel auf mehreren verschiedene Offsets) durchführt. Diese frequenzverschobenen Linien werden anschließend mittels Summenbildung addiert. Der Suchbereich dieser Methode liegt bei +-0.5Abtastrate (entspricht der Symbolrate).

Ist die Auflösung der FFT nicht hinreichend genau, so erfolgt in einer Ausgestaltung ein Zero-Padding der Eingangsdaten für die FFT/DFT. Hierdurch erhöht sich die Anzahl der Frequenzlinien der FFT/DFT. Hierbei gilt es zu beachten, dass die Nullen entweder am Anfang oder am Ende der FFT angestellt werden.

Alternativ zum Zero-Padding erfolgt in einer alternativen Ausgestaltung eine Interpolation zwischen dem Maximum und den Nachbarstellen.

Ein Vorteil ist somit, dass im Vergleich zur herkömmlichen FFT-Methode auch gesplittete Synchronisationssequenzen verhältnismäßig einfach detektierbar sind, da durch die nicht-kohärente Addition der FFTs/DFTs die Kohärenz zwischen den Synchronisationssequenzen nicht mehr gegeben sein muss.

Die in den Ausführungsbeispielen erwähnten Sequenzen beziehen sich auf eine MSK-Modulation als einem Beispiel für das Mapping, die folgende Eigenschaften besitzt:

**MSK mit precoding (matlab 'non-diff'):**

- rotation -pi/2 each time step (== right == clockwise)
- rotating for data == 1: +pi/2 == left == counterclockwise
- for data == 0: -pi/2 == right == clockwise

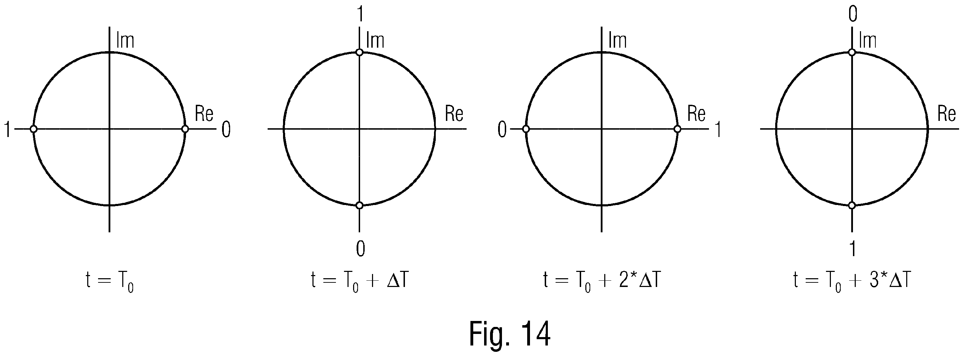

Die Fig. 14 zeigt die Abbildungsvorschrift der MSK-Modulation. Gezeigt sind dabei die möglichen Konstellationspunkte der MSK mit precoding (in MATLAB auch als non-diff MSK bekannt).

Die auszusendenden Symbole werden hierbei in Gruppen von vier Symbolen gegliedert, wobei das erste Symbol zum Zeitpunkt $T_0$ ausgesendet wird. Entsprechend wird im Zeitpunkt $T_0$ für eine binäre Null der Konstellationspunkt +1 + Oj und für eine binäre Eins der Konstellationspunkt -1 + Oj gewählt. Für das folgende Symbol wird der Zeitpunkt $T_0$ + $\Delta T$ gewählt. Die Konstellationspunkte ergeben sich damit zu 0 + 1j (binäre Eins) und 0 - 1j (binäre Null). Für die beiden folgenden Zeitpunkte erfolgt die Berechnung der Konstellationspunkte in der gleichen Weise. Nachdem vier Symbole auf die Konstellationspunkte gemappt wurden, wird wieder beim Zeitpunkt $T_0$ begonnen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen

[1] Z. Y. Choi and Y. H. Lee, "Frame synchronization in the presence of frequency offset," Communications, IEEE Transactions on, vol. 50, no. 7, pp. 1062-1065, 2002.

[2] Sust, M.K. ; Kaufmann, R. F. ; Molitor, F. ; Bjornstrom, G.A.: Rapid acquisition concept for voice activated CDMA communication. In: IEEE Global Telecommunications Conference, 1990 Bd. 3, 1990, S. 1820#1826

[3] Internationale Patentanmeldung "Optimized Preamble and Methods for Interference Robust Packet Detection for Telemetry Applications" (PCT/EP2016/057014)

[4] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[5] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.

[6] Wolfgang Koch, Skript zum Seminar Empfängersynchronisation am Fraunhofer IIS, 10.06.2015 - 15.06.2015

[7] Uwe Lambrette, Ralf Mehlan and Heinrich Meyr, Comparison of Demodulation Techniques for MSK, RWTH Aachen, https://www.ice.rwth-aachen.de/fileadmin/publications/Lambrette95TIRR.pdf, last retrieved: 19.09.2016

[8] Kay, Steven M.: Fundamentals of Statistical Signal Processing: Detection theory. Upper Saddle River, NJ : Prentice Hall PTR, 1998. ISBN 9780135041352

[9] Umberto Mengali, Aldo N. D'Andrea: "Synchronization Techniques for Digital Receivers" Plenum Press, 1997, ISBN 0-306-45725-3

[10] Walter Kellermann: "Digital Signal Processing", Vorlesungsskript vom WS 2016/17, Lehrstuhl für Multimediakommunikation und Signalverarbeitung (LMS) der Friedrich-Alexander-Universität Erlangen-Nürnberg.

[11] Steven M. Kay: "Fundamentals of Statistical Signal Processing - Vol. 2: Detection Theory", Prentice Hall, 1998, ISBN: 0-13-345711-7

[12] Z. Y. Choi and Y. H. Lee, "Frame synchronization in the presence of frequency offset", IEEE Transactions on Communications, vol. 50, no. 7, pp. 1062-1065, 2002.

**Patentansprüche**

1. Sender (1),
   wobei der Sender (1) derartig ausgestaltet ist, Signale mit jeweils einer Pilotsequenz, die mehrere Pilotsequenz-Symbole aufweist, auszusenden,
   wobei der Sender (1) einen Signalgenerator (2) aufweist,
   wobei der Signalgenerator (2) derartig ausgestaltet ist, die Pilotsequenz ausgehend von einer Basissequenz, die mehrere Basissequenz-Symbole aufweist, bereitzustellen,
   wobei der Signalgenerator (2) die Pilotsequenz mit L Pilotsequenz-Symbolen bereitstellt, indem jedes Basissequenz-Symbol R-1 mal hintereinander wiederholt wird, so dass jedes Basissequenz-Symbol R-fach vorhanden ist,
   wobei L eine natürliche Zahl ist, und
   wobei R eine natürliche Zahl größer oder gleich zwei und ein Teiler von L ist,
   wobei die Basissequenz derartig ausgestaltet ist, dass eine Korrelation der Pilotsequenz mit einem aus der Pilotsequenz gebildeten Sendesignal ein möglichst schmales Hauptmaximum und/oder möglichst kleine Nebenmaxima aufweist,
   **dadurch gekennzeichnet dass**
   die Pilotsequenz acht oder zwölf Pilotsequenz-Symbole aufweist,
   wobei in dem Fall, dass die Pilotsequenz acht Pilotsequenz-Symbole aufweist, die Basissequenz eine der folgenden Formen aufweist:
   0010 oder 1101 oder 0100 oder 1011, und
   wobei die Nullen und Einsen jeweils die binären Basissequenz-Bits sind;
   wobei in dem Fall, dass die Pilotsequenz zwölf Pilotsequenz-Symbole aufweist, die Basissequenz eine der folgenden oder daraus durch eine Umkehr der Bitreihenfolge gewonnenen Formen aufweist:

000101, 001011, 001101, 010001, 111010, 110100, 110010 oder 101110, und
wobei die Nullen und Einsen jeweils die binären Basissequenz-Bits sind.

2. Sender (1) nach Anspruch 1,
wobei der Signalgenerator (2) in der Pilotsequenz Symbolblöcke erzeugt, die jeweils ein Basissequenz-Symbol und dessen (R-1) Wiederholungen umfassen, und
wobei der Signalgenerator (2) die Pilotsequenz derartig erzeugt, dass die Symbolblöcke der Basissequenz-Symbole in einer Reihenfolge der Basissequenz-Symbole innerhalb der Basissequenz einander unmittelbar folgen.

3. Sender (1) nach einem der Ansprüche 1 bis 2,
wobei der Signalgenerator (2) in der Pilotsequenz Symbolblöcke bereitstellt, die jeweils ein Basissequenz-Symbol und dessen (R-1) Wiederholungen umfassen, und
wobei der Signalgenerator (2) die Basissequenz-Symbole derartig mit Phasenfaktoren versieht, dass die Phasenfaktoren des jeweils $i$-ten Auftretens eines Basissequenz-Symbols in einem Symbolblock für alle Symbolblöcke gleich sind, und wobei $i$ eine natürliche Zahl zwischen 1 und R ist.

4. Sender (1) nach Anspruch 3, wobei die Phasenfaktoren Bestandteile eines Modulationsalphabets sind.

5. Sender (1) nach Anspruch 3 oder 4,
wobei in dem Fall, dass die Pilotsequenz acht Pilotsequenz-Symbole aufweist, die Pilotsequenz eine der folgenden oder daraus durch eine Umkehr der Bitreihenfolge gewonnenen Formen aufweist:
01011001, 10100110, 10011010, 01100101, 00001100, 11110011, 00110000, 11001111, und
wobei die Nullen und Einsen jeweils die binären Pilotsequenz-Bits sind.

6. Sender (1) nach Anspruch 3 oder 4,
wobei in dem Fall, dass die Pilotsequenz zwölf Pilotsequenz-Symbole aufweist, die Pilotsequenz eine der folgenden oder daraus durch eine Umkehr der Bitreihenfolge gewonnenen Formen aufweist:
000000110011 oder 111111001100 oder 110011000000 oder 001100111111 oder 010101100110 oder 101010011001 oder 011001101010 oder 100110010101 oder 000011001111 oder 111100110000 oder 010110011010 oder 101001100101 oder 000011110011 oder 111100001100 oder 110011110000 oder 001100001111 oder 010110100110 oder 101001011001 oder 011001011010 oder 100110100101 oder 001100000011 oder 110011111100 oder 110000001100 oder 001111110011 oder 011001010110 oder 100110101001 oder 011010100110 oder 100101011001, und
wobei die Nullen und Einsen jeweils die binären Pilotsequenz-Bits sind.

7. Sender (1) nach einem der Ansprüche 1 bis 6,
wobei der Signalgenerator (2) die Pilotsequenz derartig bereitstellt, dass die Pilotsequenz mindestens ein Ergänzungssymbol aufweist,
wobei der Signalgenerator (2) in der Pilotsequenz Symbolblöcke bereitstellt, die jeweils ein Basissequenz-Symbol und dessen (R-1) Wiederholungen umfassen, und
wobei der Signalgenerator (2) die Pilotsequenz derartig bereitstellt, dass das mindestens ein Ergänzungssymbol den Symbolblöcken vorangeht oder nachfolgt.

8. Sender (1) nach Anspruch 7,
wobei der Signalgenerator (2) die Pilotsequenz derartig erzeugt, dass die Pilotsequenz mindestens zwei Ergänzungssymbole aufweist, und
wobei der Signalgenerator (2) die Pilotsequenz derartig bereitstellt, dass mindestens ein Ergänzungssymbol der mindestens zwei Ergänzungssymbole den Symbolblöcken vorangeht und mindestens ein anderes Ergänzungssymbol der mindestens zwei Ergänzungssymbole den Symbolblöcken nachfolgt.

9. Sender (1) nach Anspruch 7 oder 8,
wobei das mindestens eine Ergänzungssymbol oder die mindestens zwei Ergänzungssymbole derartig ausgestaltet ist bzw. sind, dass eine Korrelation der Pilotsequenz mit einem aus der Pilotsequenz gebildeten Sendesignal ein möglichst schmales Hauptmaximum und/oder möglichst kleine Nebenmaxima aufweist.

10. Sender (1) nach einem der Ansprüche 7 bis 9,
wobei in dem Fall, dass die Pilotsequenz acht Pilotsequenz-Symbole aufweist, die Basissequenz die Form 001 aufweist und zwei Ergänzungsbits vorhanden sind, die zusammen eine der folgenden Formen aufweisen:

01 oder 10 oder 00 oder 11, und

wobei die Nullen und Einsen jeweils binären Basissequenz-Bits und die binären Ergänzungssymbole sind.

11. Sender (1) nach Anspruch 10,

wobei die Pilotsequenz eine der folgenden oder daraus durch eine Umkehr der Bitreihenfolge gewonnenen Formen aufweist:

00001101 oder 11110010 oder 10110000 oder 01001111 oder 01011000 oder 10100111 oder 00011010 oder 11100101 oder 01000011 oder 10111100 oder 11000010 oder 00111101 oder 00010110 oder 11101001 oder 01101000 oder 10010111 oder 10000110 oder 01111001 oder 01100001 oder 10011110 oder 00101100 oder 11010011 oder 00110100 oder 11001011, und

wobei die Nullen und Einsen jeweils die binären Pilotsequenz-Bits sind.

12. Sender (1) nach einem der Ansprüche 7 bis 9,

wobei in dem Fall, dass die Pilotsequenz zwölf Pilotsequenz-Symbole aufweist, die Basissequenz die Form 00010 aufweist und zwei Ergänzungsbits vorhanden sind, die zusammen eine der folgenden Formen aufweisen:

01 oder 10 oder 00 oder 11, und

wobei die Nullen und Einsen jeweils binären Basissequenz-Bits und die binären Ergänzungsbits sind.

13. Sender (1) nach Anspruch 12,

wobei die Pilotsequenz eine der folgenden oder daraus durch eine Umkehr der Bitreihenfolge gewonnenen Formen aufweist:

100000011001 oder 011111100110 oder 100110000001 oder 011001111110 oder 001010110011 oder 110101001100 oder 110011010100 oder 001100101011 oder 000000110010 oder 111111001101 oder 010011000000 oder 101100111111 oder 010101100111 oder 101010011000 oder 111001101010 oder 000110010101 oder 010000001100 oder 101111110011 oder 001100000010 oder 110011111101 oder 000101011001 oder 111010100110 oder 100110101000 oder 011001010111, und

wobei die Nullen und Einsen jeweils die binären Pilotsequenz-Bits sind.

14. Verfahren zum Aussenden von Signalen,

wobei die Signale mit jeweils einer Pilotsequenz, die mehrere Pilotsequenz-Symbole aufweist, ausgesendet werden, wobei die Pilotsequenz, ausgehend von einer Basissequenz, die mehrere Basissequenz-Symbole aufweist, bereitgestellt wird,

wobei die Pilotsequenz-Symbole bereitgestellt werden, indem jedes Basissequenz-Symbol R-1 mal hintereinander wiederholt wird, so dass jedes Basissequenz-Symbol R-fach vorhanden ist, wobei L eine natürliche Zahl ist, und wobei R eine natürliche Zahl größer oder gleich zwei und ein Teiler von L ist, und

wobei die Basissequenz derartig ausgestaltet ist, dass eine Korrelation der Pilotsequenz mit einem aus der Pilotsequenz gebildeten Sendesignal ein möglichst schmales Hauptmaximum und/oder möglichst kleine Nebenmaxima aufweist,

**dadurch gekennzeichnet dass**

die Pilotsequenz acht oder zwölf Pilotsequenz-Symbole aufweist,

wobei in dem Fall, dass die Pilotsequenz acht Pilotsequenz-Symbole aufweist, die Basissequenz eine der folgenden Formen aufweist:

0010 oder 1101 oder 0100 oder 1011, und

wobei die Nullen und Einsen jeweils die binären Basissequenz-Bits sind; wobei in dem Fall, dass die Pilotsequenz zwölf Pilotsequenz-Symbole aufweist, die Basissequenz eine der folgenden oder daraus durch eine Umkehr der Bitreihenfolge gewonnenen Formen aufweist:

000101, 001011, 001101, 010001, 111010, 110100, 110010 oder 101110, und wobei die Nullen und Einsen jeweils die binären Basissequenz-Bits sind.

15. Sender (1),

wobei der Sender (1) derartig ausgestaltet ist, Signale mit jeweils einer mehrere Pilotsequenz-Symbole aufweisenden Pilotsequenz auszusenden,

**dadurch gekennzeichnet dass**

die Pilotsequenz eine der folgenden oder daraus durch eine Umkehr der BitReihenfolge gewonnenen Formen aufweist:

00001101 oder 11110010 oder 10110000 oder 01001111 oder 01011000 oder 10100111 oder 00011010 oder 11100101 oder 01000011 oder 10111100 oder 11000010 oder 00111101 oder 00010110 oder 11101001 oder 01101000 oder 10010111 oder 10000110 oder 01111001 oder 01100001 oder 10011110 oder 00101100 oder 11010011 oder 00110100 oder 11001011, und

wobei die Nullen und Einsen jeweils die binären Pilotsequenz-Bits sind.

16. Verfahren zum Aussenden von Signalen,

wobei die Signale mit jeweils einer mehrere Pilotsequenz-Symbole aufweisenden Pilotsequenz ausgesendet werden,

**dadurch gekennzeichnet dass**

die Pilotsequenz eine der folgenden oder daraus durch eine Umkehr der BitReihenfolge gewonnenen Formen aufweist:

00001101 oder 11110010 oder 10110000 oder 01001111 oder 01011000 oder 10100111 oder 00011010 oder 11100101 oder 01000011 oder 10111100 oder 11000010 oder 00111101 oder 00010110 oder 11101001 oder 01101000 oder 10010111 oder 10000110 oder 01111001 oder 01100001 oder 10011110 oder 00101100 oder 11010011 oder 00110100 oder 11001011, und

wobei die Nullen und Einsen jeweils die binären Pilotsequenz-Bits sind.

17. Computerprogramm mit einem Programmcode zur Durchführung des Verfahrens nach Anspruch 16.

**Claims**

1. A transmitter (1),

wherein the transmitter (1) is configured to transmit signals each comprising one pilot sequence comprising several pilot sequence symbols,

wherein the transmitter (1) comprises a signal generator (2),

wherein the signal generator (2) is configured to provide the pilot sequence based on a base sequence comprising several base sequence symbols,

wherein the signal generator (2) provides the pilot sequence with L pilot sequence symbols by repeating each base sequence symbol R-1 times in succession so that each base sequence symbol is present R times,

wherein L is a natural number, and

wherein R is a natural number greater than or equal to two and is a divisor of L,

wherein the base sequence is configured such that a correlation of the pilot sequence with a transmission signal formed from the pilot sequence comprises a main maximum which is as narrow as possible and/or secondary maximums which are as small as possible,

**characterized in that** the pilot sequence comprises eight or twelve pilot sequence symbols,

wherein, in case the pilot sequence comprises eight pilot sequence symbols, the base sequence comprises one of the following forms:

0010 or 1101 or 0100 or 1011, and

wherein the zeros and ones are each the binary base sequence bits;

wherein, in case the pilot sequence comprises twelve pilot sequence symbols, the base sequence comprises one of the following forms or forms obtained therefrom by reversing the bit order:

000101, 001011, 001101, 010001, 111010, 110100, 110010 or 101110, and

wherein the zeros and ones are each the binary base sequence bits.

2. The transmitter (1) as claimed in claim 1,

wherein the signal generator (2) generates symbol blocks in the pilot sequence which each comprise a base sequence symbol and its (R-1) repetitions, and

wherein the signal generator (2) generates the pilot sequence such that the symbol blocks of the base sequence symbols immediately follow one another in an order of the base sequence symbols within the base sequence.

3. The transmitter (1) as claimed in any of claims 1 to 2,

wherein the signal generator (2) in the pilot sequence provides symbol blocks each comprising a base sequence symbol and its (R-1) repetitions, and

wherein the signal generator (2) provides the base sequence symbols with phase factors such that the phase factors of the respective $i^{th}$ occurrence of a base sequence symbol in a symbol block are the same for all symbol blocks, and

wherein i is a natural number between 1 and R.

4. The transmitter (1) as claimed in claim 3, wherein the phase factors are components of a modulation alphabet.

**5.** The transmitter (1) as claimed in claim 3 or 4,
wherein, in case the pilot sequence comprises eight pilot sequence symbols, the pilot sequence comprises one of the following forms or forms obtained therefrom by reversing the bit order:
01011001, 10100110, 10011010, 01100101, 00001100, 11110011, 00110000, 11001111, and
wherein the zeros and ones are each the binary pilot sequence bits.

**6.** The transmitter (1) as claimed in claim 3 or 4,
wherein, in case the pilot sequence comprises twelve pilot sequence symbols, the pilot sequence comprises one of the following forms or forms obtained therefrom by reversing the bit order:
000000110011 or 111111001100 or 110011000000 or 001100111111 or 010101100110 or 101010011001 or 011001101010 or 100110010101 or 000011001111 or 111100110000 or 010110011010 or 101001100101 or 000011110011 or 111100001100 or 110011110000 or 001100001111 or 010110100110 or 101001011001 or 011001011010 or 100110100101 or 001100000011 or 110011111100 or 110000001100 or 001111110011 or 011001010110 or 100110101001 or 011010100110 or 100101011001, and
wherein the zeros and ones are each the binary pilot sequence bits.

**7.** The transmitter (1) as claimed in any of claims 1 to 6,
wherein the signal generator (2) provides the pilot sequence such that the pilot sequence has at least one supplementary symbol,
wherein the signal generator (2) provides symbol blocks in the pilot sequence each comprising a base sequence symbol and its (R-1) repetitions, and
wherein the signal generator (2) provides the pilot sequence in such a way that the at least one supplementary symbol precedes or follows the symbol blocks.

**8.** The transmitter (1) as claimed in claim 7,
wherein the signal generator (2) generates the pilot sequence such that the pilot sequence comprises at least two supplementary symbols, and
wherein the signal generator (2) provides the pilot sequence such that at least one supplementary symbol of the at least two supplementary symbols precedes the symbol blocks and at least one other supplementary symbol of the at least two supplementary symbols follows the symbol blocks.

**9.** The transmitter (1) as claimed in claim 7 or 8,
wherein the at least one supplementary symbol or the at least two supplementary symbols are configured such that a correlation of the pilot sequence with a transmission signal formed from the pilot sequence has a main maximum which is as narrow as possible and/or secondary maximums which are as small as possible.

**10.** The transmitter (1) as claimed in any of claims 7 to 9,
wherein, in case the pilot sequence comprises eight pilot sequence symbols, the base sequence has the form 001 and two supplementary bits are present which together comprise one of the following forms:
01 or 10 or 00 or 11, and
wherein the zeros and ones are binary base sequence bits and the binary supplementary symbols.

**11.** The transmitter (1) as claimed in claim 10,
wherein the pilot sequence comprises one of the following forms or forms obtained therefrom by reversing the bit order:
00001101 or 11110010 or 10110000 or 01001111 or 01011000 or 10100111 or 00011010 or 11100101 or 01000011 or 10111100 or 11000010 or 00111101 or 00010110 or 11101001 or 01101000 or 10010111 or 10000110 or 01111001 or 01100001 or 10011110 or 00101100 or 11010011 or 00110100 or 11001011, and
wherein the zeros and ones are each the binary pilot sequence bits.

**12.** The transmitter (1) as claimed in any of claims 7 to 9,
wherein, in case the pilot sequence comprises twelve pilot sequence symbols, the base sequence has the form 00010 and two supplementary bits are present which together comprise one of the following forms:
01 or 10 or 00 or 11, and
wherein the zeros and ones are binary base sequence bits and the supplementary binary bits.

**13.** The transmitter (1) as claimed in claim 12,
wherein the pilot sequence comprises one of the following forms or forms obtained therefrom by reversing the bit order:
100000011001 or 011111100110 or 100110000001 or 011001111110 or 001010110011 or 110101001100 or

---

110011010100 or 001100101011 or 000000110010 or 111111001101 or 010011000000 or 1011001111 or 010101100111 or 101010011000 or 111001101010 or 000110010101 or 010000001100 or 101111110011 or 001100000010 or 1100111101 or 000101011001 or 111010100110 or 100110101000 or 011001010111, and wherein the zeros and ones are each the binary pilot sequence bits.

14. A method for transmitting signals,
   wherein the signals are each transmitted with a pilot sequence comprising a plurality of pilot sequence symbols,
   wherein the pilot sequence is provided starting from a base sequence comprising a plurality of base sequence symbols,
   wherein the pilot sequence symbols are provided by repeating each base sequence symbol R-1 times in succession so that each base sequence symbol is present R times, wherein L is a natural number, and wherein R is a natural number greater than or equal to two and is a divisor of L; and
   wherein the base sequence is configured such that a correlation of the pilot sequence with a transmission signal formed from the pilot sequence has a main maximum which is as narrow as possible and/or secondary maximums which are as small as possible,
   characterized in that the pilot sequence comprises eight or twelve pilot sequence symbols,
   wherein, in case the pilot sequence comprises eight pilot sequence symbols, the base sequence comprises one of the following forms:
   0010 or 1101 or 0100 or 1011, and
   wherein the zeros and ones are each the binary base sequences bits;
   wherein, in case the pilot sequence comprises twelve pilot sequence symbols, the base sequence comprises one of the following forms or forms obtained therefrom by reversing the bit order:
   000101, 001011, 001101, 010001, 111010, 110100, 110010 or 101110, and
   wherein the zeros and ones are each the binary base sequence bits.

15. A transmitter (1),
   wherein the transmitter (1) is configured to transmit signals each comprising one pilot sequence comprising several pilot sequence symbols,
   characterized in that the pilot sequence comprises one of the following forms or forms obtained therefrom by reversing the bit order:
   00001101 or 11110010 or 10110000 or 01001111 or 01011000 or 10100111 or 00011010 or 11100101 or 01000011 or 10111100 or 11000010 or 00111101 or 00010110 or 11101001 or 01101000 or 10010111 or 10000110 or 01111001 or 01100001 or 10011110 or 00101100 or 11010011 or 00110100 or 11001011, and
   wherein the zeros and ones are each the binary pilot sequence bits.

16. A method for transmitting signals,
   wherein the signals are each transmitted with a pilot sequence comprising a plurality of pilot sequence symbols,
   characterized in that the pilot sequence comprises one of the following forms or forms obtained therefrom by reversing the bit order:
   00001101 or 11110010 or 10110000 or 01001111 or 01011000 or 10100111 or 00011010 or 11100101 or 01000011 or 10111100 or 11000010 or 00111101 or 00010110 or 11101001 or 01101000 or 10010111 or 10000110 or 01111001 or 01100001 or10011110 or 00101100 or 11010011 or 00110100 or 11001011, and
   wherein the zeros and ones are each the binary pilot sequence bits.

17. A computer program comprising a program code for carrying out the method as claimed in claim 16.


**Revendications**

1. Emetteur (1),
   dans lequel l'émetteur (1) est conçu pour émettre des signaux avec respectivement une séquence pilote qui présente plusieurs symboles de séquence pilote,
   dans lequel l'émetteur (1) présente un générateur de signaux (2),
   dans lequel le générateur de signal (2) est conçu de manière à mettre à disposition la séquence pilote à partir d'une séquence de base qui présente plusieurs symboles de séquence de base,
   dans lequel le générateur de signaux (2) met à disposition la séquence pilote avec L symboles de séquence pilote en répétant chaque symbole de séquence de base R-1 fois l'une après l'autre, de sorte que chaque symbole de séquence de base soit présent R fois,

où L est un nombre naturel, et

où R est un nombre naturel supérieur ou égal à deux et un diviseur de L,

dans lequel la séquence de base est conçue de sorte qu'une corrélation de la séquence pilote avec un signal d'émission formé à partir de la séquence pilote présente un maximum principal aussi étroit que possible et/ou des maximums secondaires aussi petits que possible,

**caractérisé par le fait que**

la séquence pilote présente huit ou douze symboles de séquence pilote,

dans lequel, au cas où la séquence pilote présente huit symboles de séquence pilote, la séquence de base présente l'une des formes suivantes:

0010 ou 1101 ou 0100 ou 1011, et

dans lequel les zéros et les uns sont respectivement les bits de séquence de base binaire;

dans lequel, au cas où la séquence pilote présente douze symboles de séquence pilote, la séquence de base présente l'une des formes suivantes ou des formes obtenues à partir de ces dernières en inversant l'ordre des bits: 000101, 001011, 001101, 010001, 111010, 110100, 110010 ou 101110, et

dans lequel les zéros et les uns sont respectivement les bits de séquence de base binaire.

2. Emetteur (1) selon la revendication 1,

dans lequel le générateur de signaux (2) génère, dans la séquence pilote, des blocs de symboles qui comportent, chacun, un symbole de séquence de base et ses (R-1) répétitions, et

dans lequel le générateur de signaux (2) génère la séquence pilote de sorte que les blocs de symboles des symboles de séquence de base se suivent immédiatement dans un ordre des symboles de séquence de base dans la séquence de base.

3. Emetteur (1) selon l'une des revendications 1 à 2,

dans lequel le générateur de signaux (2) met à disposition, dans la séquence pilote, des blocs de symboles qui comportent, chacun, un symbole de séquence de base et ses (R-1) répétitions, et

dans lequel le générateur de signaux (2) pourvoit les symboles de séquence de base de facteurs de phase de sorte que les facteurs de phase de chaque i-ième apparition d'un symbole de séquence de base dans un bloc de symboles soient identiques pour tous les blocs de symboles, et où i est un nombre naturel compris entre 1 et R.

4. Emetteur (1) selon la revendication 3, dans lequel les facteurs de phase sont des éléments d'un alphabet de modulation.

5. Emetteur (1) selon la revendication 3 ou 4,

dans lequel, au cas où la séquence pilote présente huit symboles de séquence pilote, la séquence pilote présente l'une des formes suivantes ou des formes obtenues à partir de ces dernières en inversant l'ordre des bits: 01011001, 10100110, 10011010, 01100101, 00001100, 11110011, 00110000, 11001111 et

dans lequel les zéros et les uns sont respectivement les bits de séquence pilote binaire,

6. Emetteur (1) selon la revendication 3 ou 4,

dans lequel, au cas où la séquence pilote présente douze symboles de séquence pilote, la séquence pilote présente l'une des formes suivantes ou des formes obtenues à partir de ces dernières en inversant l'ordre des bits: 000000110011 ou 111111001100 ou 110011000000 ou 001100111111 ou 010101100110 ou 101010011001 ou 011001101010 ou 100110010101 ou 000011001111 ou 111100110000 ou 010110011010 ou 101001100101 ou 000011110011 ou 111100001100 ou 110011110000 ou 001100001111 ou 010110100110 ou 101001011001 ou 011001011010 ou 100110100101 ou 001100000011 ou 110011111100 ou 110000001100 ou 001111110011 ou 011001010110 ou 100110101001 ou 011010100110 ou 100101011001, et

dans lequel les zéros et les uns sont respectivement les bits de séquence pilote binaire.

7. Emetteur (1) selon l'une des revendications 1 à 6,

dans lequel le générateur de signaux (2) met à disposition la séquence pilote de sorte que la séquence pilote présente au moins un symbole complémentaire,

dans lequel le générateur de signaux (2) met à disposition, dans la séquence pilote, des blocs de symboles qui comportent, chacun, un symbole de séquence de base et ses (R-1) répétitions, et

dans lequel le générateur de signaux (2) met à disposition la séquence pilote de sorte que l'au moins un symbole complémentaire précède ou suit les blocs de symboles.

8. Emetteur (1) selon la revendication 7,

dans lequel le générateur de signaux (2) génère la séquence pilote de sorte que la séquence pilote présente au moins deux symboles complémentaires, et

dans lequel le générateur de signaux (2) met à disposition la séquence pilote de sorte qu'au moins un symbole complémentaire parmi les au moins deux symboles complémentaires précède les blocs de symboles et qu'au moins un autre symbole complémentaire parmi les au moins deux symboles complémentaires suive les blocs de symboles.

**9.** Emetteur (1) selon la revendication 7 ou 8,

dans lequel l'au moins un symbole complémentaire ou les au moins deux symboles complémentaires est ou sont conçus de sorte qu'une corrélation de la séquence pilote avec un signal d'émission formé à partir de la séquence pilote présente un maximum principal aussi étroit que possible et/ou des maximums secondaires aussi petits que possible.

**10.** Emetteur (1) selon l'une des revendications 7 à 9,

dans lequel, au cas où la séquence pilote présente huit symboles de séquence pilote, la séquence de base présente la forme 001 et sont présents deux bits complémentaires qui présentent ensemble l'une des formes suivantes:

01 ou 10 ou 00 ou 11, et

dans lequel les zéros et les uns sont respectivement des bits de séquence de base binaire et les symboles complémentaires binaires,

**11.** Emetteur (1) selon la revendication 10,

dans lequel la séquence pilote présente l'une des formes suivantes ou des formes obtenues à partir de ces dernières en inversant l'ordre des bits:

00001101 ou 11110010 ou 10110000 ou 01001111 ou 01011000 ou 10100111 ou 00011010 ou 11100101 ou 01000011 ou 10111100 ou 11000010 ou 00111101 ou 00010110 ou 11101001 ou 01101000 ou 10010111 ou 10000110 ou 01111001 ou 01100001 ou 10011110 ou 00101100 ou 11010011 ou 00110100 ou 11001011, et

dans lequel les zéros et les uns sont respectivement les bits de séquence pilote binaire.

**12.** Emetteur (1) selon l'une des revendications 7 à 9,

dans lequel, au cas où la séquence pilote présente douze symboles de séquence pilote, la séquence de base présente la forme 00010 et sont présents deux bits complémentaires qui présentent ensemble l'une des formes suivantes:

01 ou 10 ou 00 ou 11, et

dans lequel les zéros et les uns sont respectivement des bits de séquence binaire de base et les bits complémentaires binaires.

**13.** Emetteur (1) selon la revendication 12,

dans lequel la séquence pilote présente l'une des formes suivantes ou des formes obtenues à partir de ces dernières en inversant l'ordre des bits:

100000011001 ou 011111100110 ou 100110000001 ou 011001111110 ou 001010110011 ou 110101001100 ou 110011010100 ou 001100101011 ou 000000110010 ou 111111001101 ou 010011000000 ou 101100111111 ou 010101100111 ou 101010011000 ou 111001101010 ou 000110010101 ou 010000001100 ou 101111110011 ou 001100000010 ou 110011111101 ou 000101011001 ou 111010100110 ou 100110101000 ou 011001010111, et

dans lequel les zéros et les uns sont respectivement les bits de séquence pilote binaire.

**14.** Procédé pour émettre des signaux,

dans lequel les signaux sont émis respectivement avec une séquence pilote qui présente plusieurs symboles de séquence pilote,

dans lequel la séquence pilote est mise à disposition en partant d'une séquence de base qui présente plusieurs symboles de séquence de base,

dans lequel les symboles de séquence pilote sont mis à disposition en répétant chaque symbole de séquence de base R-1 fois l'une après l'autre de sorte que chaque symbole de séquence de base soit présent R fois, où L est un nombre naturel, et où R est un nombre naturel supérieur ou égal à deux et est un diviseur de L, et

dans lequel la séquence de base est conçue de sorte qu'une corrélation de la séquence pilote avec un signal d'émission formé à partir de la séquence pilote présente un maximum principal aussi étroit que possible et/ou des maximums secondaires aussi petits que possible,

**caractérisé par le fait que**

la séquence pilote présente huit ou douze symboles de séquence pilote,

dans lequel, au cas où la séquence pilote présente huit symboles de séquence pilote, la séquence de base présente l'une des formes suivantes:

0010 ou 1101 ou 0100 ou 1011, et

dans lequel les zéros et les uns sont respectivement les bits de séquence de base binaire;

dans lequel, au cas où la séquence pilote présente douze symboles de séquence pilote, la séquence de base présente l'une des formes suivantes ou des formes obtenues à partir de ces dernières en inversant l'ordre des bits: 000101, 001011, 001101, 010001, 111010, 110100, 110010 ou 101110, et

dans lequel les zéros et les uns sont respectivement les bits de séquence de base binaire.

**15.** Emetteur (1),

dans lequel l'émetteur (1) est conçu de manière à émettre des signaux avec une séquence pilote présentant respectivement une pluralité de symboles de séquence pilote,

**caractérisé par le fait que**

la séquence pilote présente l'une des formes suivantes ou des formes obtenues à partir de ces dernières en inversant l'ordre des bits:

00001101 ou 11110010 ou 10110000 ou 01001111 ou 01011000 ou 10100111 ou 00011010 ou 11100101 ou 01000011 ou 10111100 ou 11000010 ou 00111101 ou 00010110 ou 11101001 ou 01101000 ou 10010111 ou 10000110 ou 01111001 ou 01100001 ou 10011110 ou 00101100 ou 11010011 ou 00110100 ou 11001011, et

dans lequel les zéros et les uns sont respectivement les bits de séquence pilote binaire.

**16.** Procédé pour émettre des signaux,

dans lequel les signaux sont émis, chacun, avec une séquence pilote qui présente plusieurs symboles de séquence pilote,

**caractérisé par le fait que**

la séquence pilote présente l'une des formes suivantes ou des formes obtenues à partir de ces dernières en inversant l'ordre des bits:

00001101 ou 11110010 ou 10110000 ou 01001111 ou 01011000 ou 10100111 ou 00011010 ou 11100101 ou 01000011 ou 10111100 ou 11000010 ou 00111101 ou 00010110 ou 11101001 ou 01101000 ou 10010111 ou 10000110 ou 01111001 ou 01100001 ou 10011110 ou 00101100 ou 11010011 ou 00110100 ou 11001011, et

dans lequel les zéros et les uns sont respectivement les bits de séquence pilote binaire.

**17.** Programme d'ordinateur avec un code de programme pour mettre en oeuvre le procédé selon la revendication 16.

Fig. 1

AKF[i]

Fig. 2

Fig. 3

Fig. 4

Fig. 5

Fig. 6

Fig. 7

Fig. 8

000011|01
111100|10
10|110000
01|001111

010110|00
101001|11
00|011010
11|100101

01|000011
10|111100
110000|10
001111|01

00|010110
11|101001
011010|00
100101|11

1|000011|0
0|111100|1
0|110000|1
1|001111|0

0|010110|0
1|101001|1
0|011010|0
1|100101|1

Fig. 9

1 | 0000001100 | 1
0 | 1111110011 | 0
1 | 0011000000 | 1
0 | 1100111111 | 0

0 | 0101011001 | 0
1 | 1010100110 | 1
1 | 1001101010 | 1
0 | 0110010101 | 0

0000001100 | 10
1111110011 | 01
01 | 0011000000
10 | 1100111111

0101011001 | 11
1010100110 | 00
11 | 1001101010
00 | 0110010101

01 | 0000001100
10 | 1111110011
0011000000 | 10
1100111111 | 01

00 | 0101011001
11 | 1010100110
1001101010 | 00
0110010101 | 11

Fig. 10

Fig. 11

Fig. 12

Fig. 13

t = T$_0$          t = T$_0$ + ΔT          t = T$_0$ + 2*ΔT          t = T$_0$ + 3*ΔT

Fig. 14

EP 3 610 595 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082098 A1

- EP 2016057014 W

**In der Beschreibung aufgeführte Nicht-Patentliteratur**

- ANALYSIS OF DOWN-LINK LOCATION METHODS FOR WCDMA AND CDMA2000. **WANG S S et al.** CONNECTING THE MOBILE WORLD: PROCEEDINGS / IEEE VTS 53RD VEHICULAR TECHNOLOGY CONFERENCE. SPRING, 2001
- **GARD D et al.** Chip interleaved turbo codes for DS-CDMA in a Rayleigh fading channel with diversity reception. *VTC 2002-FALL. 2002 IEEE 56TH. VEHICULAR TECHNOLOGY CONFERENCE PROCEEDINGS,* 24. September 2002
- OFDM Timing and Frequency Offset Estimation Based on Repeated Training Sequence. **ZH H YU et al.** WIRELESS COMMUNICATIONS; NETWORKING AND MOBILE COMPUTING; 2007. WICOM 2007. INTERNATIONAL CONFERENCE ON. IEEE, 21. September 2007
- A novel timing estimation method for OFDM systems. **BYUNGJOON PARK et al.** IEEE COMMUNICATIONS LETTERS. IEEE SERVICE CENTER, 01. Mai 2003
- **Z. Y. CHOI ; Y. H. LEE.** Frame synchronization in the presence of frequency offset. *Communications, IEEE Transactions on,* 2002, vol. 50 (7), 1062-1065
- **SUST, M.K. ; KAUFMANN, R. F. ; MOLITOR, F. ; BJORNSTROM, G.A.** Rapid acquisition concept for voice activated CDMA communication. *IEEE Global Telecommunications Conference,* 1990, vol. 3, 1820-1826
- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013

- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961
- **WOLFGANG KOCH.** *Skript zum Seminar Empfängersynchronisation am Fraunhofer IIS,* 10. Juni 2015
- **UWE LAMBRETTE ; RALF MEHLAN ; HEINRICH MEYR.** Comparison of Demodulation Techniques for MSK. *RWTH Aachen,* 19. September 2016, https://www.ice.rwth-aachen.de/fileadmin/publications/Lambrette95TIRR.pdf
- **KAY, STEVEN M.** Fundamentals of Statistical Signal Processing: Detection theory. Prentice Hall PTR, 1998
- **UMBERTO MENGALI ; ALDO N. D'ANDREA.** Synchronization Techniques for Digital Receivers. Plenum Press, 1997
- **WALTER KELLERMANN.** Digital Signal Processing. *Vorlesungsskript vom WS 2016/17*
- Fundamentals of Statistical Signal Processing. **STEVEN M. KAY.** Detection Theory. Prentice Hall, 1998, vol. 2
- **Z. Y. CHOI ; Y. H. LEE.** Frame synchronization in the presence of frequency offset. *IEEE Transactions on Communications,* 2002, vol. 50 (7), 1062-1065